# EUROPÄISCHE PATENTSCHRIFT

(11) **EP 2 452 453 B1**
(45) Veröffentlichungstag und Bekanntmachung des Hinweises auf die Patenterteilung: **12.09.2018**
(21) Anmeldenummer: 10725989.7
(22) Anmeldetag: 10.06.2010
(51) Int. Cl.: H04J 3/06, H04H 60/04, H04R 29/00, H04W 88/00, H04H 20/71

(54) **VERFAHREN ZUR DRAHTLOSEN ECHTZEITÜBERTRAGUNG**
METHOD FOR WIRELESS REAL TIME TRANSMISSION
MÉTHODE DE TRANSMISSION SANS FIL EN TEMPS RÉEL

(30) Priorität: 06.07.2009 DE 102009031995
(43) Veröffentlichungstag der Anmeldung: 16.05.2012
(73) Patentinhaber: NEUTRIK AG, 9494 Schaan (LI)
(72) Erfinder: BACHMANN, Werner, FL-9494 Schaan (LI); KUNKEL, Peter, FL-9495 Triesen (LI); HOLTZEM, Ludger, 9478 Atzmoos (CH); LEUCHT-ROTH, Ulrich, 81825 München (DE); SCHWARZ, Patrik, 80538 München (DE)
(74) Vertreter: Hofmann, Ralf U.
(86) Internationale Anmeldenummer: PCT/EP2010/003489
(87) Internationale Veröffentlichungsnummer: WO 2011/003495

(56) Entgegenhaltungen:
- WO-A1-2008/113053
- WO-A2-2004/043032
- WO-A2-2006/032978
- WO-A2-2007/125175
- US-B1- 6 466 832
- US-B1- 6 865 188

## Beschreibung

Die Erfindung bezieht sich auf ein Verfahren zur drahtlosen Echtzeitübertragung zumindest eines Audiosignales in zumindest einem Audio-Kanal von mindestens einer Sende-Audiostation zu einer zentralen Basisstation und zumindest eines weiteren Audiosignals in zumindest einem weiteren Audio-Kanal von der zentralen Basisstation zu einer Empfangs-Audiostation, wobei die mindestens eine Sende-Audiostation mindestens eine Netzwerk-Einheit zum drahtlosen Senden von Audio-Datenpaketen über zumindest einen Funk-Kanal und mindestens eine Audio-Einheit aufweist, von der mit einer von einem Audioclock-Signal vorgegebenen Rate zumindest ein dieser Sende-Audiostation drahtgebunden zugeführtes analoges Audiosignal unter Bildung digitaler Samples digitalisiert wird und/oder zumindest ein dieser Sende-Audiostation drahtgebunden zugeführtes digitales Audiosignal eingelesen wird, und die mindestens eine Empfangs-Audiostation mindestens eine Netzwerk-Einheit zum drahtlosen Empfangen von Audio-Datenpaketen über zumindest über einen Funk-Kanal und mindestens eine Audio-Einheit aufweist, von der mit einer von einem Audioclock-Signal vorgegebenen Rate digitale Samples zumindest eines von dieser Empfangs-Audiostation über den Funk-Kanal oder einen der Funk-Kanäle empfangenen Audiosignals in ein analoges Audiosignal gewandelt werden und/oder digitale Samples zumindest eines von dieser Empfangs-Audiostation über den Funk-Kanal oder einen der Funk-Kanäle empfangenen Audiosignals drahtgebunden ausgegeben werden, und wobei die Basisstation zumindest eine Netzwerk-Einheit zum drahtlosen Senden und Empfangen von Audio-Datenpaketen und mindestens eine Audio-Einheit aufweist, von der zumindest ein Audiosignal analog-digital und/oder digital-analog gewandelt werden kann, und von der Basisstation in mindestens einem sich regelmäßig wiederholenden Service-Slot System-Datenpakete an die Sende- und Empfangs-Audiostationen übermittelt werden.

Bei der Echtzeitübertragung von Audiosignalen dürfen nur geringe Zeitverzögerungen zwischen dem Einspeisen eines Audiosignals beim Sender und der Ausgabe des Audio-signals beim Empfänger auftreten, beispielsweise damit von einem Beobachter die optische und akustische Wahrnehmung als gleichzeitig empfunden wird. Um bei der Übertragung von Sprache den Eindruck einer Lippensynchronität zu erhalten, sollte die Zeitverzögerung unter 20ms liegen. Besonders hoch sind die Anforderungen an die Zeitverzögerung beispielsweise, wenn ein von einem Musiker erzeugtes Audiosignal diesem in einem Rückkanal (Monitor) wieder zugespielt wird. Damit das zugespielte Audiosignal als gleichzeitig wahrgenommen wird, muss die Zeitverzögerung unter 10ms, besser unter 5ms liegen.

Bei herkömmlichen drahtlosen Übertragungseinrichtungen von Audiosignalen, beispielsweise von einer Signalquelle zu einem Lautsprecher, werden üblicherweise Datenkomprimierungsverfahren eingesetzt, die zu einem Qualitätsverlust führen. Eine hohe Qualität ohne Komprimierung ist aber beispielsweise für Aufzeichnungen von Live-Musikdarbietungen und/oder Studio-Anwendungen erforderlich. Einschränkungen von bisherigen drahtlosen Systemen für Live-Musikdarbietungen liegen in der beschränkten Anzahl von Kanälen, die sich mit vertretbarem Aufwand gleichzeitig betreiben lassen. Eine wesentliche Einschränkung kommt hier in Zukunft von der Verbreitung von DVB-T.

Bei WLAN (wireless local area network) Netzwerkverbindungen übernimmt im Infrastruktur-Modus eine spezielle Basisstation (Access Point) die Koordination der anderen Stationen (Clients). Die Basisstation sendet in festen Intervallen (z.B. zehn mal pro Sekunde) System-Datenpakete (die noch nicht die eigentlichen zu übertragenden Nutzdaten enthalten), sogenannte Beacons an alle Stationen im Empfangsbereich. Die Beacons enthalten u.a. Informationen über den Namen des Netzwerks, die unterstützten Übertragungsraten und die Art der Verschlüsselung.

Der übliche heutige WLAN-Standard ist in den Spezifikationen der IEEE 802.11-Normierung standardisiert und umfasst den PHY (Physical Layer) und den MAC (Media Access bzw. Datalink Layer). Das WLAN PHY umfasst einen Radioteil, über den das eigentliche Senden und Empfangen von Radiosignalen über den gewählten Funkkanal erfolgt, der beispielsweise im 5GHz- oder 2,4GHz-Bereich liegt, und einen Modemteil zur Modulation und Demodulation der Funksignale im gewählten Modulationsverfahren, beispielsweise dem OFDM-Modulationsverfahren.

Um Daten kontinuierlich (als "Streaming-Anwendung") und in Echtzeit zu übertragen, ist herkömmliches WLAN nach dem Standard IEEE 802.11 nicht gut geeignet. Als "Besteffort, collission-avoidance"-Datenübertragungsmethode wird eine erforderliche definierte Bandbreite nicht mit Sicherheit garantiert und noch weniger die für eine Echtzeitübertragung mit hoher Qualität erforderliche geringe Latenzzeit.

Um die WLAN-Übertragung möglichst optimiert zu gestalten, ist es bekannt und üblich, die WLAN-Clocks (WLAN-Timer bzw. WLAN-Zeitgeber) der Basisstation und der einzelnen Clients zu synchronisieren. Anhand von deren Zeitsignalen erfolgt das Senden und Empfangen von Datenpaketen von der Basisstation zu den einzelnen Clients bzw. umgekehrt.

Aus der WO 2007/125175 A2 ist ein Verfahren zur drahtlosen Echtzeitübertragung von Audiosignalen von einer Basisstation zu Empfangsstationen, insbesondere Lautsprechern, bekannt, bei welchem der herkömmliche WLAN-Standard IEEE 802.11 verwendetwird. Es wird hierbei ein üblicherweise wenig benutzter Modus eingesetzt, und zwar der sogenannte "Contention-free traffic", der neben dem üblichen "Contention traffic", in welchem Intervall allen Clients ein Senden von Daten an die Basisstation erlaubt ist, herangezogen wird. Hierbei wird das Intervall des "Contention-free traffics" ausreichend groß eingestellt, um die erforderliche Bandbreite bereitzustellen. Durch das CF-Ende-Kontrollsignal wird ein Interrupt ausgelöst, durch den die Audio-Clocks der Empfangsstationen synchronisiert werden.

Von der Basisstation wird das Audiosignal gleichzeitig an alle Empfangsstationen, insbesondere Lautsprechern, in aufeinanderfolgenden Frames übermittelt. Es handelt sich also um ein "Multicasting-Verfahren", wobei die Empfangsstationen aus dem empfangenen Datenstrom, beispielsweise einem 7.1-Kanal Surround-Audiodatenstrom, das für sie jeweils relevante Signal, also den entsprechenden Kanal, extrahieren. Das Empfangen der einzelnen Frames der Audiosignale in den einzelnen Empfangsstationen ist hierbei durch ein Interrupt-Signal synchronisiert, welches in jedem Beacon-Intervall enthalten ist.

Ein Nachteil dieses Systems besteht darin, dass der Startzeitpunkt einer "contention-free period" und damit die Latenzzeit nicht garantiert werden kann. Auch erfolgt die Übertragung von Audiosignalen nur in Richtung von der Basisstation zu den Empfangsstationen, insbesondere Lautsprechern.

Aus der DE 10 2004 026 487 B4 ist weiters ein Verfahren der eingangs genannten Art zum Betreiben einer Datenverbindung zwischen einer Basisstation und einer oder mehrerer Mobilstationen bekannt, bei der es sich insbesondere um eine WLAN-Funkverbindung nach einem IEEE 802.11-Standard handelt, um einen realzeitkritischen Datenstrom, also beispielsweise einen Audio-Datenstrom zu übertragen. Bei diesem Verfahren werden der Beginn und das Ende jeder Datenpaketbildung durch die Beacon-Signale getriggert, sodass die Datenpaketbildung unabhängig von dem Übertragungszeitpunkt der Datenpakete innerhalb der jeweiligen Übertragungsphase ist und empfängerseitig somit ein unmittelbares Zusammensetzen der Datenpakete möglich ist, ohne dass deren Übersendungszeitraum berücksichtigt werden müsste. Zeitverzögerungen werden dadurch verringert, wobei die erreichbaren Audioqualitäten allerdings beschränkt sind. Die Übertragung der Datenpakete erfolgt unter Heranziehung des Infrastruktur-Modus koordiniert durch die Basisstation in der contention-free-Periode.

Aus der US 2007/01688819 A1 geht ein Verfahren zur drahtlosen Echtzeitübertragung von bereits digitalisierten Audiosignalen hervor, insbesondere aus einem digitalen Mikrofon. Es wird hierbei ein spezieller Kanalfilter vorgeschlagen.

Aufgabe der Erfindung ist es ein Verfahren der eingangs genannten Art bereitzustellen, durch welches die Qualität der übertragenen Audiosignale verbessert wird. Erfindungsgemäß gelingt dies durch ein Verfahren mit den Merkmalen des Anspruchs 1.

Beim Verfahren gemäß der Erfindung werden von der Basisstation in den Service-Slots übermittelte System-Datenpakete, die keine Nutzdaten enthalten, und/oder in den Daten-Slots übermittelte Audio-Datenpakete, die (auch) Nutzdaten enthalten, herangezogen, um anhand dieser System-Datenpakete und/oder Audio-Datenpakete das Audioclock-Signal der jeweiligen Audiostation mit dem Audioclock-Signal der Basisstation zu synchronisieren. Falls zwei oder mehr Audiostationen vorhanden sind, werden die Audioclock-Signale aller Audiostationen mit dem Audioclock-Signal der Basisstation synchronisiert, sodass damit auch die Audioclock-Signale aller Audiostationen miteinander synchronisiert sind.

Falls das mindestens eine in der jeweiligen Audiostation kabellos (=drahtlos) empfangene (also über die Luftschnittstelle bzw. über den Funk-Kanal oder einen der Funk-Kanäle empfangene) Audiosignal von der Audiostation analog auszugeben ist, so werden vom Audio clock-Signal der Audiostation die periodischen Marken (="Audio-Tick" bzw. "Flanken") für die Digital-Analog-Wandlung in dieser Audiostation geliefert. Falls das mindestens eine in der jeweiligen Audiostation kabellos empfangene Audiosignal digital drahtgebunden auszugeben ist (beispielsweise an ein über ein Kabel angeschlossenes separates Gerät), so erfolgt diese Ausgabe mit der vom Audioclock-Signal vorgegebenen Rate. Auch eine Kombination einer Digital-Analog-Wandlung und einer drahtgebundenen Ausgabe des gleichen Audiosignals oder eines weiteren Audiosignals ist denkbar und möglich.

Falls der jeweiligen Audiostation mindestens ein analoges Audiosignal drahtgebunden zugeführt wird, wobei dieses Audiosignal an die Basisstation oder an eine andere Audiostation zu übermitteln ist, so werden vom Audioclock-Signal der Audiostation die periodischen Marken für die Analog-Digital-Wandlung in dieser Audiostation geliefert. Falls der jeweiligen Audiostation mindestens ein digitales Audiosignal drahtgebunden zugeführt wird, wobei dieses Audiosignal an die Basisstation oder an eine andere Audiostation zu übermitteln ist, so erfolgt das Einlesen des digitalen Audiosignals mit der vom Audioclock-Signal vorgegebenen Rate.

Wenn im Rahmen dieser Schrift von einer Übermittlung (bzw. Übertragung) eines Audio-signals zwischen der Basisstation und einer Audiostation die Rede ist, wobei natürlich eine Übermittlung (Übertragung) über die Luftschnittstelle gemeint ist, so sollen hierbei beide Übermittlungsrichtungen umfasst sein, also ein Senden von der Basisstation zur Audiostation, ein Senden von der Audiostation zur Basisstation und ein Senden in beide Richtungen.

Es kann vorgesehen sein, dass die vorhandenen Audiostationen jeweils entweder nur zum Senden oder nur zum Empfangen ausgebildet sind, wobei im Gesamtsystem sowohl zum Senden als auch zum Empfangen ausgebildete Audiostationen vorhanden sind. Denkbar und möglich ist es aber auch, dass eine, mehrere oder alle der vorhandenen Audiostationen sowohl zum Senden als auch zum Empfangen eines Audiosignals ausgebildet sind.

Der Begriff einer "Synchronisation" des Audioclock-Signals einer jeweiligen Audiostation mit dem Audioclock-Signal der Basisstation wird im Rahmen dieser Schrift in dem Sinn verwendet, dass die über einen jeweiligen vorgegebenen Zeitraum ausgegebene Anzahl von Audio-Ticks dieser Audiostation mit der über den gleichen Zeitraum ausgegebenen Anzahl von Audio-Ticks der Basisstation in Übereinstimmung gebracht wird. Es kann daher gesagt werden, dass eine Frequenz-Synchronisation durchgeführt wird. Eine PhasenSynchronisation der Audioclock-Signale ist dagegen nicht erforderlich.

Durch die Synchronisation der Audioclock-Signale der jeweiligen Audiostation mit dem Audioclock-Signal der Basisstation über die Luftschnittstelle kann Jitter von übertragenen Audiosignalen verringert werden.

Zur Synchronisation des Audioclock-Signals der jeweiligen Audiostation mit dem Audio clock-Signal der Basisstation werden vorzugsweise Zeitinformationen (="Time-Stamps") herangezogen, die mit den von der Basisstation übermittelten System-Datenpaketen und/oder Audio-Datenpaketen mitgesandt werden und den Absendezeitpunkt des betreffenden System-Datenpakets und/oder Audio-Datenpakets angeben. Da die Zeitstruktur bzw. (Frame-Struktur) der Übermittlung der System-Datenpakete und/oder Audio-Datenpakete vorgegeben ist (die Datenpakete werden von der Basisstation in Zeitfenstern mit vorgegebenen Intervallen übermittelt), können die mitgesandten Zeitinformationen zur Aktualisierung der das Audioclock-Signal erzeugenden Audio-Clock der betreffenden Audiostation herangezogen werden. Anstelle der Heranziehung von mitgesandten Zeitinformationen können beispielsweise auch die Empfangszeitpunkte der System-Datenpakete und/oder Audio-Datenpakete in der jeweiligen Audiostation erfasst werden und diese Empfangszeitpunkte zur Aktualisierung der Audio-Clock der Audiostation herangezogen werden.

Erfindungsgemäß sind zwei oder mehr Audio-Kanäle vorgesehen, über die jeweils eines der Audiosignale übermittelt wird. Jeder der Audio-Kanäle kann somit eine "Tonspur" übertragen, wobei die Audiosignale der einzelnen Audio-Kanäle voneinander unabhängig sein können. In einer möglichen Ausführungsvariante kann hierbei eine jeweilige Audiostation ein Audiosignal nur in einem einzigen der Audio-Kanäle senden und/oder empfangen. Denkbar und möglich ist es auch, dass zumindest eine Audiostation vorgesehen ist, die zum Senden und/oder Empfangen von Audiosignalen in zwei oder mehr Audio-Kanälen ausgebildet ist. So könnten beispielsweise die beiden Kanäle eines Stereosignals von einer einzelnen Audiostation empfangen oder gesendet werden.

Vorzugsweise wird beim erfindungsgemäßen Verfahren ein Monocast-Verfahren angewendet, d.h. die Übertragung eines Audiosignals in einem Audio-Kanal erfolgt von einer der Stationen zu einer einzigen der anderen Stationen, z.B. wird ein von der Basisstation in einem Audio-Kanal gesendetes Audiosignal jeweils nur von einer der Audiostationen empfangen. Denkbar und möglich wäre es auch, dass für einen oder mehrere der Audio-Kanäle zwei oder mehr Stationen als Empfänger vorgesehen sind (beispielsweise könnte eine Audiostation senden und die Basisstation und eine andere Audiostation das gesendete Audiosignal empfangen).

Eine vorteilhafte Ausführungsform der Erfindung sieht vor, dass die Basisstation mindestens zwei, besonders bevorzugt mehr als zwei, Netzwerk-Einheiten aufweist, wobei jede Netzwerk-Einheit Daten über einen eigenen Funkkanal übermittelt, der sich von den Funkkanälen der anderen Netzwerk-Einheiten unterscheidet. Hierbei übermittelt jede der Netzwerk-Einheiten in mindestens einem regelmäßig sich wiederholenden Service-Slot System-Datenpakete an die mindestens eine mit dieser Netzwerk-Einheit kommunizierende Audiostation. Falls auch ein Audiosignal an eine jeweilige Audiostation zu übermitteln ist, werden von der jeweiligen Netzwerk-Einheit weiters in mindestens einem regelmäßig sich wiederholenden Daten-Slot Audio-Datenpakete an die Audiostation übermittelt. Die Service-Slots der einzelnen Netzwerk-Einheiten der Basisstation und gegebenenfalls auch die Daten-Slots der einzelnen Netzwerk-Einheiten der Basisstation sind hierbei derart miteinander synchronisiert, dass sie zeitlich jeweils zusammenfallen. Dies kann durch eine Verkabelung erfolgen, über die ein entsprechendes Taktsignal übermittelt wird. Jede der Netzwerk-Einheiten der Basisstation ist im ihr zugeordneten Funkkanal vorzugsweise für die Übertragung zumindest eines Audiosignals über zumindest einen Audio-Kanal, besonders bevorzugt für die Übertragung von Audiosignalen über jeweils mehr als einen Audio-Kanal zuständig.

Günstigerweise weist die Basisstation zwei oder mehr Audio-Einheiten auf, von denen jeweils mit einer von einem Audioclock-Signal vorgegebenen Rate das analoge Audiosignal zumindest eines der Audio-Kanäle unter Bildung digitaler Samples digitalisiert wird und/oder digitale Samples des Audiosignals von zumindest einem der Audio-Kanäle in das analoge Audiosignal dieses Audio-Kanals gewandelt werden, wobei für die Audio-Einheiten der Basisstation das gleiche (durch Verkabelung zugeführte) Audioclock-Signal der Basisstation verwendet wird oder zumindest miteinander synchronisierte Audioclock-Signale verwendet werden. Eine solche Synchronisation kann über eine Verkabelung, über die ein entsprechendes Taktsignal übermittelt wird, durchgeführt werden. Da weiters die Audioclock-Signale der Audiostationen unter Heranziehung der ihnen in den Service-Slots übermittelten System-Datenpakete mit dem Audioclock-Signal der Basisstation synchronisiert sind, kann ein in mehreren Audio-Kanälen (voneinander unabhängige) Audiosignale (=Tonspuren) übertragendes System mit über die Luftschnittstelle synchronisierten Audio-Ticks aller Audiostationen und der Basisstation bereitgestellt werden.

Erfindungsgemäß erfolgt die Übertragung von Audiosignalen in zwei oder mehr Audio-Kanälen in einem synchronen Zeitmultiplex-Verfahren, sodass die zwei oder mehr Audio-Kanäle über den gleichen Funk-Kanal übertragen werden können. Günstigerweise können hierbei von jeder der Netzwerk-Einheiten der Basisstation und/oder der jeweiligen Audiostation zwei oder mehr Audio-Kanäle zum Senden und/oder Empfangen eines Audiosignals bereitgestellt werden. Hierbei ist jedem Audio-Kanal ein Daten-Slot (=Daten-Zeitschlitz) innerhalb eines Multiplex-Frames (=Multiplex-Rahmens, wobei ein Frame bzw. ein Rahmen eine periodisch sich wiederholende Struktur darstellt) zugeteilt, d.h. innerhalb des Multiplex-Frames sind zwei oder mehr Daten-Slots vorhanden. In diesen Daten-Slots werden die Audio-Daten (das sind also die Nutzdaten) des jeweiligen Audio-Kanals übertragen. Der Multiplex-Frame weist zusätzlich zu den zwei oder mehr Daten-Slots mindestens einen Service-Slot (denkbar und möglich sind auch zwei oder mehr Service-Slots) auf, über den die System-Datenpakete übertragen werden können.

Die Multiplex-Frames der miteinander kommunizierenden Stationen, also insbesondere der Basisstation und der mit ihr kommunizierenden Audiostationen, sind hierbei günstigerweise miteinander synchronisiert, wobei die Intervalle der jeweils einander zugeordneten Slots der Basisstation und der betreffenden Audiostation übereinstimmen (bezüglich der Phasenlage können geringfügige Abweichungen auftreten, welche aber vorzugsweise geringer als 5% der Dauer eines jeweiligen Slots sind). Falls die Basisstation zwei oder mehr Netzwerk-Einheiten aufweist, so stimmen die Daten-Slots und der mindestens eine Service-Slot der Multiplex-Frames der Netzwerk-Einheiten zeitlich miteinander überein. Die Synchronisation der Netzwerk-Einheiten der Basisstation kann hierbei durch einen Verdrahtung erfolgen, über die ein entsprechendes periodisches Taktsignal ("Mulitplex-Frame-Tick") zugeführt wird. Die zwei oder mehr Netzwerk-Einheiten der Basisstation werden also auf unterschiedlichen Funkkanälen parallel betrieben.

Zur Synchronisation des Multiplex-Frames der Netzwerk-Einheit der jeweiligen Audiostation mit dem Multiplex-Frame der mindestens einen Netzwerk-Einheit der Basisstation, können vorzugsweise die von der Basisstation in den Service-Slots übermittelten System-Datenpakete und/oder die von der Basisstation in den Daten-Slots übermittelten Audio-Datenpakete herangezogen werden.

Vorzugsweise wird als Modulationsverfahren zur Funkübertragung der Daten das bekannte OFDM eingesetzt.

In einer vorteilhaften Ausführungsform der Erfindung werden in den Netzwerk-Einheiten der Basisstation und der Audiostationen Standard WLAN-Komponenten eingesetzt. Mit anderen Worten wird der von WLAN übernommene PHY der Luftschnittstelle eingesetzt, während ein stark geänderter MAC eingesetzt wird. Vom MAC des Standard-WLAN wird übernommen, dass in regelmäßig sich wiederholenden Service-Slots System-Datenpakete an die Audiostationen übermittelt werden, welche z.B. Netzwerk-Informationen, insbesondere den Netzwerknamen (nicht aber die eigentlichen Nutzdaten) enthalten. Günstigerweise können diese System-Datenpakete modifizierte Beacons des Standard-WLAN sein, sodass diese von Standard-WLAN-Stationen (die sich im Funkbereich des erfindungsgemäßen Netzwerks befinden) als Beacons erkannt werden. Dadurch können nicht zum erfindungsgemäßen Netzwerk gehörende WLAN-Stationen ausgeschlossen werden.

Die Elemente, welche günstigerweise aus dem WLAN-Standard übernommen werden, entsprechen hierbei vorzugsweise einem Standard aus der IEE 802.11-Standardisierung, wobei als Modulationsverfahren (in Kapitel 17 des Standards) insbesondere OFDM eingesetzt wird.

Ein erfindungsgemäßes Verfahren ist vorteilhafterweise bei Bühnenanwendungen, insbesondere von Musikdarbietungen, also bei Live-Konzerten, einsetzbar. Die Basisstation wird hierbei über entsprechende Eingänge und/oder Ausgänge über Verbindungskabel direkt oder über mindestens eine weitere Komponente, z.B. eine sogenannte Stagebox, mit Ausgängen und/oder Eingängen eines Mischpults verbunden.

Obwohl in einer vorteilhaften Ausführungsform alle Übertragungen von Musiksignalen von einer Sende-Audiostation an eine Empfangs-Audiostation unter Zwischenschaltung der Basisstation erfolgen, d.h. die Basisstation empfängt das Audiosignal von der Sende-Audiostation und sendet das Audiosignal an die Empfangs-Audiostation, ist es auch denkbar und möglich, dass vorgesehen ist, Audiosignale direkt zwischen Audiostationen zu übermitteln.

Der übertragbare Frequenzbereich eines (jeweiligen) Audiosignals reicht vorzugsweise zumindest von 30Hz bis 18kHz, besonders bevorzugt zumindest von 20Hz bis 20kHz.

Weitere Vorteile und Einzelheiten der Erfindung werden im Folgenden anhand der beiliegenden Zeichnung erläutert. In dieser zeigen:
Fig. 1 eine schematische Darstellung eines Bühnenaufbaus für eine Musikdarbietung mit einer drahtlosen Übertragung der Audiosignale gemäß dem erfindungsgemäßen Verfahren;
Fig. 2 eine schematische vereinfachte Darstellung der Ausbildung der Basisstation;
Fig. 3 eine schematische vereinfachte Darstellung der Ausbildung einer Sende-Audiostation;
Fig. 4 eine schematische vereinfachte Darstellung der Ausbildung einer Empfangs-Audiostation;
Fig. 5 den Multiplex-Frame;
Fig. 6 den Hyper-Frame;
Fig. 7 beispielhaft den Ablauf der Übertragung von einer Sende-Audiostation an die Basisstation;
Fig. 8 beispielhaft den Ablauf der Übertragung von zwei Sende-Audiostationen an die Basisstation;
Fig. 9 beispielhaft den Ablauf der Übertragung von der Basisstation an zwei Empfangs-Audiostationen;
Fig. 10 eine beispielhafte Darstellung des Ablaufs der Synchronisierung einer Audio-Clock einer Audiostation;
Fig. 11 eine schematische Darstellung der Synchronisierung der Audio-Clocks.

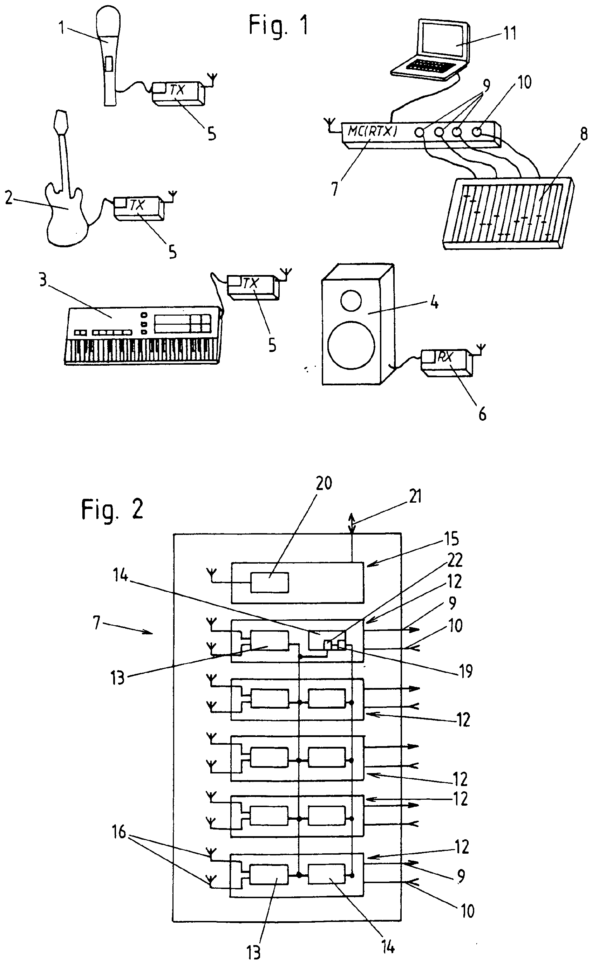

Der in Fig. 1 schematisch dargestellte Aufbau für eine drahtlose Übertragung von Audiosignalen umfasst Audiosignalquellen 1, 2, 3, beispielsweise in Form von Mikrofonen und/oder Musikinstrumenten, wobei als Audiosignalquellen beispielsweise auch Abspielgeräte für gespeicherte Audiosignale in Frage kommen. In Fig. 1 ist weiters ein Audio-Wiedergabegerät 4 dargestellt, welches von einem Lautsprecher gebildet wird. Zusätzlich zu einem oder mehreren Audio-Wiedergabegeräten oder anstelle hiervon kann auch mindestens ein Audio-Aufzeichnungsgerät und/oder ein Audio-Übertragungsgerät vorgesehen sein.

Mit der mindestens einen Audiosignalquelle 1, 2, 3, und/oder dem mindestens einen Abspielgerät für gespeicherte Audiosignale ist jeweils eine Sende-Audiostation 5 (über ein Kabel) verbunden. Auch eine Integration der Sende-Audiostation 5 in die Audiosignalquelle 1, 2, 3 bzw. das mindestens eine Abspielgerät ist möglich. Auch dann erfolgt die Verbindung über mindestens einen elektrischen Leiter. In beiden Varianten (nicht integriert bzw. integriert) ist die Verbindung somit drahtgebunden. Mit dem mindestens einen Audio-Wiedergabegerät 4 und/oder dem mindestens einen Audio-Aufzeichnungsgerät und/oder dem mindestens einen Audio-Übertragungsgerät ist jeweils eine Empfangs-Audiostation 6 (über ein Kabel) verbunden. Auch eine Integration der Empfangs-Audiostation 6 in das mindestens eine Audio-Wiedergabegerät 4 bzw. das mindestens eine Audio-Aufzeichnungsgerät bzw. das mindestens eine Audio-Übertragungsgerät ist denkbar und möglich. Auch dann erfolgt die Verbindung über mindestens einen elektrischen Leiter. In beiden Varianten (nicht integriert bzw. integriert) ist die Verbindung drahtgebunden. Die Verbindung mit der jeweiligen Sende-Audiostation 5 bzw. der jeweiligen Empfangs-Audiostation 6 kann auch über dazwischen geschaltete Komponenten, z.B. eine Stagebox erfolgen. Die mindestens eine Sende-Audiostation 5 und die mindestens eine Empfangs-Audiostation 6 kommunizieren mit einer zentralen Basisstation 7. Diese ist über mindestens einen Audio-Ausgang 9, vorzugsweise über jeweils einen Audio-Ausgang 9 für jede einzubindende Audiosignalquelle 1, 2, 3 und/oder jedes einzubindende Abspielgerät, und über mindestens einen Audio-Eingang 10, vorzugsweise über jeweils einen Audio-Eingang 10 für jedes einzubindende Audio-Wiedergabegerät 4 und/oder Audio-Aufzeichnungsgerät und/oder Audio-Übertragungsgerät (mittels eines jeweiligen Kabels) mit dem Mischpult 8 verbunden. Auch dazwischen geschaltete Komponenten können vorgesehen sein. Auch eine Integration der zentralen Basisstation 7 in das Mischpult 8 ist denkbar und möglich. Auch dann erfolgt die Verbindung des jeweiligen Audio-Ausgangs 9 bzw. Audio-Eingangs 10 der Basisstation mit den jeweiligen Komponenten des Mischpults über mindestens einen elektrischen Leiter. In beiden Varianten (nicht integriert bzw. integriert) ist die Verbindung drahtgebunden.

Zusätzlich zu mindestens einer Sende-Audiostation 5 und/oder mindestens einer Empfangs-Audiostation 6 oder anstelle dieser könnte auch mindestens eine kombinierte Sende-Empfangs-Audiostation vorgesehen sein, die mit einem entsprechenden Gerät (über ein Kabel) verbunden ist oder in dieses integriert ist (und über mindestens einen elektrischen Leiter mit diesem verbunden ist).

Audiosignalquellen, wie Audio-Abspielgeräte, und/oder Audio-Wiedergabegeräte, wie Audio-Aufzeichnungsgeräte und/oder Audio-Übertragungsgeräte, können auch über ein Kabel direkt oder über zwischengeschaltete Komponenten mit der Basisstation 7 oder dem Mischpult 8 verbunden sein.

Auch Eingänge für ein digitales Audiosignal können vorgesehen sein.

An der Basisstation 7 ist weiters ein Steuergerät 11, insbesondere in Form eines Computers, angeschlossen.

Ein solcher Aufbau dient insbesondere Wiedergabe und/oder Aufzeichnung einer Musikdarbietung, insbesondere eines Live-Konzertes.

Das in Fig. 2 schematisch dargestellte Ausführungsbeispiel für eine Basisstation 7 umfasst fünf Funkkanal-Einheiten 12, die jeweils eine Netzwerk-Einheit 13 und eine Audio-Einheit 14 umfassen. Die Netzwerk-Einheiten 13 dienen zum drahtlosen Senden und/oder Empfangen von Daten über jeweils einen Funkkanal, wobei die gleichzeitig betriebenen Netzwerk-Einheiten 13 verschiedene Funkkanäle verwenden. Vorzugsweise kann jede Netzwerk-Einheit 13 auf unterschiedlichen Funkkanälen senden und empfangen und den Netzwerk-Einheiten 13 werden von einer System-Kontrolleinheit 15 jeweils voneinander unterschiedliche Funkkanäle zugewiesen:

Vorzugsweise sind die Netzwerk-Einheiten 13 jeweils gemäß einem PHY eines WLANs ausgebildet, insbesondere nach einer IEEE 802.11-Norm. Die jeweilige Netzwerk-Einheit 13 bildet hierbei einen Access Point (AP) eines Infrastrukturnetzwerkes. In anderer Weise ausgebildete Netzwerk-Einheiten 13 sind aber denkbar und möglich.

Diversity mit jeweils zwei Antennen 16 pro Netzwerk-Einheit 13 ist günstigerweise vorgesehen, aber nicht zwingend.

In Empfangsrichtung, d.h. wenn ein Audiosignal von einer Sende-Audiostation 5 empfangen wird, werden von der Netzwerk-Einheit 13 empfangene Datenpakete an die jeweilige ihr zugeordnete Audio-Einheit 14 weitergegeben und in dieser in ein analoges Audiosignal gewandelt, welches an einem Audio-Ausgang 9 abgenommen werden kann.

In Senderichtung, wenn von der Basisstation 7 ein Audiosignal an eine Empfangs-Audiostation 6 gesendet wird, wird das der Audio-Einheit 14 über einen Audio-Eingang 10 zugeführte analoge Audiosignal von der Audio-Einheit 14 digitalisiert und in Datenpaketen der ihr zugeordneten Netzwerk-Einheit 13 übergeben.

Obwohl ein Aufbau, bei dem Funkkanal-Einheiten 12 vorgesehen sind, welche jeweils eine Netzwerk-Einheit 13 und eine Audio-Einheit 14 aufweisen, vorteilhaft ist, ist ein solcher Aufbau nicht zwingend.

Es können auch mehr oder weniger als fünf Netzwerk-Einheiten 13 und/oder Audio-Einheiten 14 vorgesehen sein. Denkbar und möglich wäre es auch, dass zwei oder mehr Netzwerk-Einheiten 13 einer gemeinsamen Audio-Einheit 14 zugeordnet sind oder dass zwei oder mehr Audio-Einheiten 14 einer gemeinsamen Netzwerk-Einheit 13 zugeordnet sind.

Zumindest weist die Basisstation 7 eine Netzwerk-Einheit 13 zum Senden und Empfangen von Audiodaten und eine Audio-Einheit 14 auf, von der ein Audiosignal analog-digital und/oder digital-analog gewandelt werden kann.

Eine jeweilige Audio-Einheit 14 kann nur zum Digital-Analog-Wandeln von Audiosignalen oder nur zum Analog-Digital-Wandeln von Audiosignalen oder zum wahlweisen Analog-Digital- und Digital-Analog-Wandeln ausgebildet sein.

Zum synchronisierten Digital-Analog- bzw. Analog-Digital-Wandeln in den einzelnen Audio-Einheiten 14 wird ein gemeinsames Audioclock-Signal eingesetzt. Dieses kann von außen zugeführt werden oder von einer beispielsweise auf einer der Audio-Einheiten 14 angeordneten Audio-Clock 19 erzeugt werden, die einen Oszillator darstellt. Die Frequenz des Audioclock-Signals ist vorzugsweise höher als 1MHz. Beispielsweise kann die Frequenz des Audioclock-Signals 12,288MHz betragen. Bei einem üblichen 256-fachen Oversampling ergibt dies eine Sampling-Rate (Abtastrate) des Audiosignals von 48kHz. Diese Abtastrate und dieses Oversampling werden im herkömmlichen "LIVE-Profil" definiert. Auch Abtastraten von 96kHz werden bereits eingesetzt. Mit dem gleichen Oversampling müsste das Audioclock-Signal dann die doppelte Frequenz aufweisen. Die Verkabelung, über die das Audioclock-Signal allen Audio-Einheiten 14 zugeführt ist, ist in Fig. 2 schematisch dargestellt.

Die System-Kontrolleinheit 15, die ebenfalls eine Netzwerk-Einheit 20 aufweist, von welcher aber keine Audiosignale (=Nutzdaten) übertragen werden, übernimmt Kontrollfunktionen für die Netzwerk-Einheiten 13, über welche die Übertragung der Audiosignale (=Nutzdaten) erfolgt. Beispielsweise weist die System-Kontrolleinheit 15 jeder der Netzwerk-Einheiten 13 einen Funkkanal zu. Weiters prüft die System-Kontrolleinheit 15 auf Radaraktivität (gemäß EU, EN 301893) und wenn für einen Funkkanal eine solche festgestellt wird, wird dieser geräumt (der diesen Funkkanal verwendenden Netzwerk-Einheit 13 wird ein anderer Funkkanal zugewiesen). Weiters stellt die System-Kontrolleinheit 15 ein Interface zum Anschluss an ein Steuergerät 11, insbesondere einen Computer dar, zu welchem Zweck sie einen entsprechenden, als Eingang und Ausgang dienenden Anschluss 21 aufweist. Auch andere Eingabe- und/oder Ausgabevorrichtungen (beispielsweise Anzeigevorrichtungen), können an die System-Kontrolleinheit 15 anschließbar sein oder in diese integriert sein.

Ausgabevorrichtungen, beispielsweise LEDs für verschiedene Statusanzeigen, und/oder Eingabevorrichtungen, beispielsweise Taster zur Belegung eines Audio-Kanals, sind für die Funkkanal-Einheiten 12 günstigerweise vorgesehen, der Einfachheit halber aber nicht dargestellt.

Die System-Kontrolleinheit 15 und die die Audio-Clock 19 aufweisende Funkkanal-Einheit 12 können zu einem Master-Modul integriert sein, mit dem die weiteren Funkkanal-Einheiten 12 in der gewünschten Anzahl modular verbunden werden können.

Aus dem Audioclock-Signal wird weiters durch einen Teiler 22 ein wesentlich niederfrequenteres Signal gewonnen, welches Marken zur Bereitstellung von "Multicast-Frames" liefert. Diese periodischen Marken können dementsprechend als "Multicast-Tick" bezeichnet wird. Dieser Multicast-Tick wird allen Netzwerk-Einheiten 13, über die die Übertragung der Nutzdaten erfolgt, zugeführt, sodass die Multicast-Frames, die weiter unten genauer beschrieben werden, dieser Netzwerk-Einheiten 13 übereinstimmen. Weiters wird der Multicast-Tick auch den Audio-Einheiten 14 zugeführt. Die Verdrahtung zur Zuführung des Multicast-Tick zu den Netzwerk-Einheiten 13 und Audio-Einheiten 14 ist in Fig. 2 schematisch dargestellt. Anstelle einer Zuführung des Multicast-Tick zu den einzelnen Audio-Einheiten 14 (und evtl. auch zu den Netzwerk-Einheiten 13) könnte dieser in den einzelnen Audio-Einheiten 14 aus dem zugeführten Audioclock-Signal auch jeweils generiert werden (und dann evtl. auch weiter der jeweiligen Netzewrk-Einheit 13 zugeführt werden).

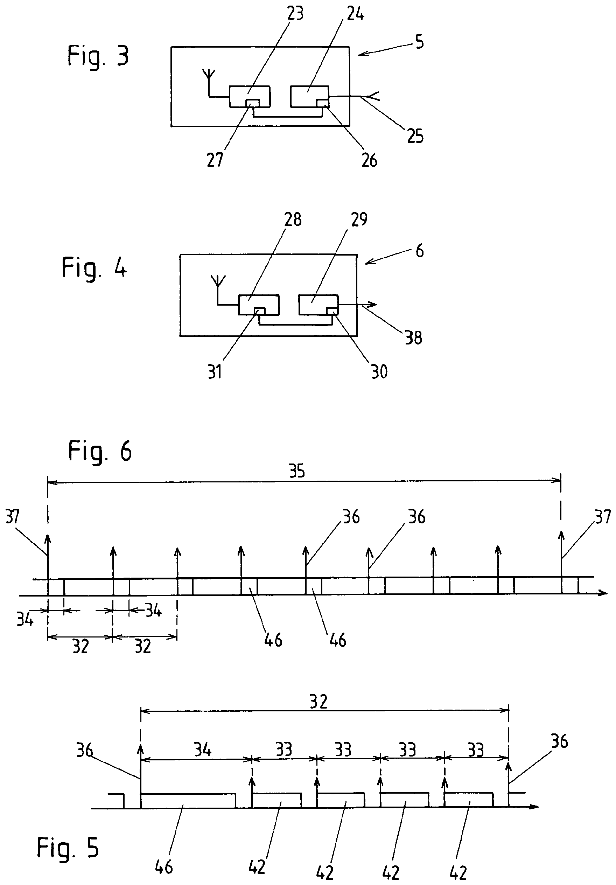

Die Ausbildung einer Sende-Audiostation 5 ist in Fig. 3 schematisch dargestellt. Diese weist eine Netzwerk-Einheit 23 auf, die im Betrieb mit einer der Netzwerk-Einheiten 13 der Basisstation 7 kommuniziert und somit zum Senden und Empfangen von Daten dient. Audiosignale (=Nutzdaten) werden hierbei nur gesendet und nicht empfangen. Bei den empfangenen Daten handelt es sich um Systemdaten, wie Informationsdaten und/oder Steuerdaten.

Die Sende-Audiostation 5 umfasst weiters eine Audio-Einheit 24, von der ein über einen Audio-Eingang 25 (z.B. "MIC" oder "LINE IN") zugeführtes Audiosignal digitalisiert wird. Die Rate (=Sampling-Rate) mit der digitale Samples des Audiosignals gebildet werden wird von einem Audioclock-Signal vorgegeben, das von einer Audio-Clock 26 ausgegeben wird (d.h. ein Audio-Tick wird bereitgestellt). Die Frequenz des Audioclock-Signals entspricht (bis auf Toleranzen) der des Audioclock-Signals der Basisstation 7. Zur weiter unten beschriebenen Synchronisierung des Audioclock-Signals der Sende-Audiostation 5 mit dem Audioclock-Signal der Basisstation 7 ist in Fig. 3 schematisch eine Synchronisations-Einheit 27 eingezeichnet.

Eine Empfangs-Audiostation 6 ist in Fig. 4 schematisch dargestellt. Diese weist wiederum eine Netzwerk-Einheit 28 auf, die im Betrieb mit einer der Netzwerk-Einheiten 13 der Basisstation 7 kommuniziert und somit zum Senden und Empfangen von Daten über einen Funkkanal dient. Nutzdaten werden hierbei nur empfangen, nicht gesendet. Weiters werden Systemdaten empfangen, welche beispielsweise Informationsdaten und/oder Steuerdaten enthalten können. Systemdaten können von der Empfangs-Audiostation 6 auch an die Basisstation 7 übermittelt werden.

Die Empfangs-Audiostation 6 umfasst weiters eine Audio-Einheit 29 von der digitale Samples eines Audiosignals in ein analoges Audiosignal gewandelt werden, das an einem Audio-Ausgang 38 abnehmbar ist. Die Wandlung erfolgt hierbei mit einer Rate (=Sampling-Rate), die von einem Audioclock-Signal vorgegeben wird, das von einer Audio-Clock 30 ausgegeben wird (d.h. ein Audio-Tick wird bereitgestellt). Die Frequenz des Audioclock-Signals entspricht hierbei (abgesehen von Toleranzen) der Frequenz des Audioclock-Signals der Basisstation 7. Zur weiter unten beschriebenen Synchronisierung des Audioclock-Signals der Empfangs-Audiostation 6 mit dem Audioclock-Signal der Basisstation 7 ist in Fig. 4 eine Synchronisations-Einheit 31 schematisch dargestellt.

Die Netzwerk-Einheiten 23, 28 können, wie bereits im Zusammenhang mit der Basisstation 7 als vorteilhafte Ausführungsform angeführt, dem PHY eines WLAN gemäß einem IEEE 802.11-Standard ausbilden.

Die Übertragung der Audiosignale in mehreren Audio-Kanälen erfolgt nach einem synchronen Zeitmultiplexverfahren (STD bzw. synchronous time division). Eine Ausführungsform eines hierfür eingesetzten Multiplex-Frames 32 ist in Fig. 5 dargestellt. Von einer jeweiligen Netzwerk-Einheit 13 der Basisstation 7 können hierbei zwei oder mehr Audio-Kanäle bereitgestellt werden, über die Audiosignale gesendet und/oder empfangen werden. Jedem dieser Audio-Kanäle ist ein Daten-Slot (=Daten-Zeitschlitz) zugeteilt. Im gezeigten Ausführungsbeispiel sind im Multiplex-Frame 32 vier Daten-Slots 33 enthalten. Weiteres enthält der Multiplex-Frame 32, vorzugsweise zu Beginn des Frames, einen Service-Slot 34, über den Systemdaten, z.B. Informations- und/oder Steuerdaten, übertragen werden.

Der Service-Slot 34 wird von der Basisstation 7 verwendet, um im Service-Slot 34 System-Datenpakete an die mit ihr kommunizierenden oder anzusprechenden Audio-Stationen 5, 6 zu übermitteln. Die System-Datenpakete können beispielsweise Informationsdaten, z. B. Informationen über das Netzwerk (z. B. den Netzwerknamen) und/oder eine Zeitinformation über den Zeitpunkt ihrer Absendung (=Time-Stamp), und/oder Steuerdaten, z.B. Befehle, enthalten. Vorzugsweise entspricht zumindest der Beginn eines jeweiligen von der Basisstation 7 übermittelten System-Datenpakets einem Beacon einer WLAN-Spezifikation nach einem IEEE 802.11-Standard.

Die in den Daten-Slots 33 übermittelten Datenpakete (=Audio-Datenpakete) enthalten die die Audiosignale darstellenden Nutzdaten. Vorzugsweise sind in den Audio-Datenpaketen keine Systemdaten enthalten. Denkbar und möglich ist es aber auch, dass die Audio-Datenpakete zusätzlich Systemdaten enthalten, beispielsweise Informationsdaten.

Es muss nicht in jedem Service-Slot von zeitlich aufeinander folgenden Multiplex-Frames 32 ein System-Datenpaket von der Basisstation 7 übermittelt werden. Vielmehr ist es bevorzugt, dass ein Teil der Service-Slots auch von den Audiostationen 5, 6 verwendet wird. Beispielsweise können aufeinander folgende Service-Slots 34 wechselweise von der Netzwerk-Einheit 13 der Basisstation 7 und von einer der mit dieser Netzwerk-Einheit 13 kommunizierenden Audiostationen 5, 6 verwendet werden. Im Falle der synchronen Übertragung über vier Audio-Kanäle, d.h. einer Kommunikation von maximal vier Audiostationen 5, 6 mit einer jeweiligen Netzwerk-Einheit 13 der Basisstation 7, können somit acht Multiplex-Frames 32 zu einem Hyper-Frame 35 zusammengefasst sein, der in Fig. 6 dargestellt ist. In den einzelnen Multiplex-Frames 32 ist hierbei jeweils nur der Service-Slot 34 dargestellt. Jeder zweite der Service-Slots 34 wird von der betreffenden Netzwerk-Einheit 13 der Basisstation 7 genutzt und die dazwischen liegenden Service-Slots 34 werden reihum von den Netzwerk-Einheiten 23, 28 der mit dieser Netzwerk-Einheit 13 der Basisstation 7 kommunizierenden Audiostationen 5, 6 genutzt.

Beispielsweise kann die von den Multiplex-Frame-Ticks 36 vorgegebene Dauer eines Multiplex-Frames 500µs betragen d.h. die Frequenz der Multiplex-Frame-Ticks 36 beträgt 2kHz. Ein Frequenzbereich der Multiplex-Frame-Ticks 36 zwischen 500Hz und 10kHz ist hierbei bevorzugt.

Die Anzahl der Multiplex-Frames 32 im Hyper-Frame 35 entspricht in der beschriebenen Ausbildung dem doppelten Wert der Anzahl der Daten-Slots 33 im Multiplex-Frame 32.

Vorzugsweise sind die Längen der einzelnen Daten-Slots 33 im Multiplex-Frame 32 gleich. Die Länge des Service-Slots 34 kann gleich oder unterschiedlich wie die Längen der Daten-Slots 33 sein.

Wie beschrieben sind im in den Fig. 5 und 6 dargestellten Ausführungsbeispiel somit vier Audio-Kanäle pro zur Übertragung von Nutzdaten vorgesehener Netzwerk-Einheit 13 vorgesehen, über die vier voneinander unabhängige Audiosignale (Tonspuren) gesendet oder empfangen werden können. Jeder der Audio-Kanäle kann zum Senden von Audiodaten zu einer Empfangs-Audiostation 6 oder zum Empfangen von Audiodaten von einer Sende-Audiostation 5 konfiguriert sein, wobei für eine einzelne Netzwerk-Einheit 13 ein Teil der Audio-Kanäle zum Senden und ein Teil der Audio-Kanäle um Empfangen konfiguriert sein kann. Entsprechend der Anzahl von vier Audio-Kanälen weist jede Funkkanal-Einheit 12 vier Audio-Ausgänge 9 und vier Audio-Eingänge 10 auf, die insbesondere von Steckverbindern gebildet werden. Diese Audio-Ausgänge 9 und Audio-Eingänge 10 dienen zur kabelgebundenen Verbindung mit einem externen Gerät, insbesondere einem Mischpult 8. Pro Funkkanal-Einheit 12 können auch mehr oder weniger als vier Audio-Kanäle und somit mehr oder weniger als vier Audio-Ausgänge 9 und vier Audio-Eingänge 10 vorgesehen sein, wobei eine Anzahl von mindestens zwei (also ein Multiplex-Betrieb) bevorzugt und eine Anzahl von drei oder mehr besonders bevorzugt ist.

Im beschriebenen Ausführungsbeispiel weist jede Sende-Audiostation 5 und jede Empfangs-Audiostation 6 einen einzelnen Audio-Kanal auf und entsprechend einen einzelnen Audio-Eingang 25 bzw. Audio-Ausgang 38. Denkbar und möglich ist es auch pro Audiostation 5, 6 mehr als einen Audio-Kanal zu übertragen und eine entsprechende Anzahl von Audio-Ausgängen 38 bzw. Audio-Eingängen 25 vorzusehen. Andererseits denkbar und möglich ist es auch, eine, mehrere oder alle Audiostationen 5, 6 wahlweise als Sende- oder Empfangsstation konfigurierbar zu gestalten. Eine solche wahlweise als Sende- oder Empfangsstation konfigurierbare Audiostation könnte zum Übertragen von Daten in einem oder mehr als einem Audio-Kanal vorgesehen sein und würde eine der Anzahl der Audio-Kanäle entsprechende Anzahl von Audio-Eingängen 25 und Audio-Ausgängen 38 aufweisen.

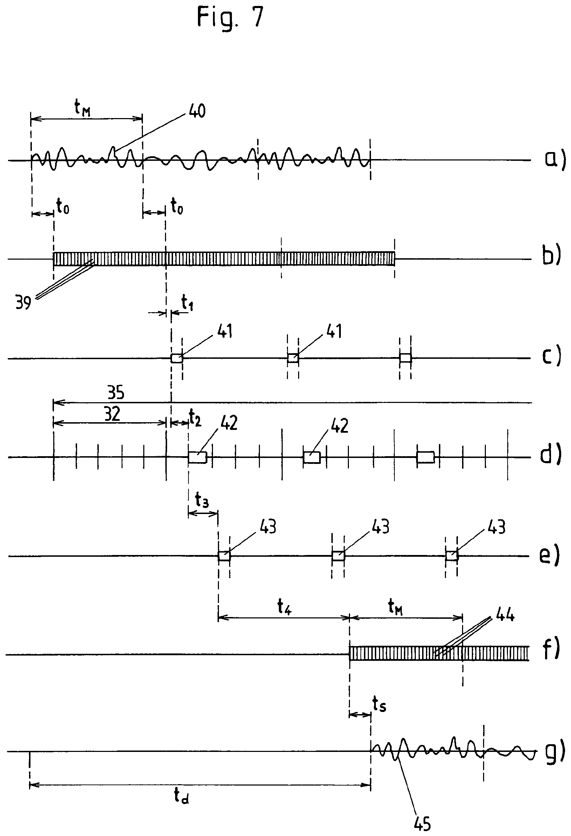

Fig. 7 zeigt die Übertragung eines Audiosignals von einer Sende-Audiostation 5 an die Basisstation 7 als Beispiel. Die Figur zeigt den Datenaustausch an wichtigen Interfaces.

Das Diagramm von Fig. 7a zeigt das über den Audio-Eingang 25 zugeführte analoge Audiosignal 40. Von einem Analog-Digital-Wandler der Audio-Einheit 24 wird das Audiosignal 40 mit der von der Audio-Clock 26 vorgegebenen Abtastrate digitalisiert, und zwar über die Zeitdauer t_{M} eines Multiplex-Frames, z.B. also über 500µs. Es wird eine entsprechende Anzahl von digitalen Samples 39 gebildet, beispielsweise bei einer Abtastrate von 48kHz werden 24 Samples gebildet, bei einer Abtastrate von 96kHz 48 Samples (Fig. 7b). Diese besitzen jeweils eine Wortlänge einer vorgegebenen Anzahl von bits, beispielsweise 24 bit. Die Zeitverzögerung t₀ zwischen dem Beginn des Audiosignals 40 und dem ersten Sample 39 kann beispielsweise im Bereich von 200µs liegen.

Von einem Signalprozessor (DSP) der Audio-Einheit 24 werden die Samples 39 zu einem Datenpaket 41 gepackt (vgl. Fig. 7c). Hierbei können die Audiodaten mit Zusatzdaten versehen werden, beispielsweise einem Header, der eine Adresse der Audio-Einheit 24 enthalten kann und Fehlerschutzinformationen. Vom letzten Sample 39 der Abtastperiode t_{M} und dem Beginn des zu dieser Abtastperiode t_{M} gehörenden Datenpakets 41 tritt wieder eine gewisse Zeitverzögerung t₁ auf, abhängig von der Verarbeitung im DSP.

Die Datenpakete 41 werden der Netzwerk-Einheit 23 übergeben und sie werden entsprechend aufbereitet, um in dem dieser Sende-Audiostation 5 zugeordneten Daten-Slot 33 von der Netzwerk-Einheit 23 als Audio-Datenpaket 42 verschickt zu werden, vgl. Fig. 7 d. Die Verzögerungszeit t₂ zwischen dem Beginn des Datenpakets 41 und dem Beginn des Audio-Datenpakets 42 hängt auch davon ab, in welchem der Daten-Slots 33 das Audio-Datenpaket 42 zu übermitteln ist.

Von der zugeordneten Netzwerk-Einheit 13 der Basisstation 7 werden im jeweiligen, der betreffenden Sende-Audiostation 5 zugeordneten Daten-Slot 33 Audio-Datenpakete 42 empfangen. Die empfangenen Audio-Datenpakete werden nach Aufbereitung (z.B. Entfernung des Headers) dem DSP (Digitalen Signal Prozessor) der Audio-Einheit 14 als Datenpakete 43 übergeben, wobei die Verzögerungszeit t₃ wiederum von der Verarbeitung im DSP abhängt. (vgl. Fig. 7e).

Vom DSP der Audio-Einheit 14 werden aus den Datenpaketen 43 Samples 44 des digitalisierten Audiosignals gebildet, wobei die Anzahl der Samples 44 innerhalb der Abtastperiode t_{M} der vorgegebenen Rate entspricht, mit der das Audiosignal digitalisiert worden ist und wieder in ein analoges Signal umzuwandeln ist, beispielsweise können 24 oder 48 Samples pro Abtastintervall t_{M} von 500µs vorgesehen sein. Zwischen dem Beginn des Datenpakets 43 und dem zugehörigen ersten Sample 44 liegt eine Zeitverzögerung t₄ vor, wobei in diesem Zeitraum t₄ vorteilhafterweise auch ein Fehlerkorrektur-Algorithmus im Falle eines fehlerhaften oder fehlenden Datenpakets 43 durchgeführt wird. Beispielsweise kann ein "Concealment-Algorithmus" durchgeführt werden, mit dem ein fehlerhaftes Datenpaket durch eine Art Interpolationsverfahren angenähert wird.

Die Samples 44 des digitalen Audio-Signals werden vom Digital-Analog-Wandler der Audio-Einheit 14 in ein analoges Audiosignal 45 gewandelt, wobei die Zeitverzögerung t₅ beispielsweise wiederum im Bereich von 200µs liegen kann. Das analoge Audiosignal 45 liegt an diesem Audio-Kanal zugeordneten Audio-Ausgang 17 der Audio-Einheit 14 der Basisstation 7 an.

Die gesamte Zeitverzögerung t_{d} zwischen dem der Sende-Audiostation 5 zugeführten Audiosignal 40 und dem von der Basisstation 7 ausgegebenen Audiosignal 45 beträgt vorzugsweise weniger als 8ms, wobei ein Wert von weniger als 5ms besonders bevorzugt ist.

Vorteilhafterweise ist die gesamte Zeitverzögerung t_{d} im Wesentlichen fixiert, wobei der Wert von den Systemkomponenten, der Art der Fehlerkorrektur usw. für einen jeweils konkret gewählten Aufbau abhängen kann.

Beispielsweise kann die Zeitverzögerung t_{d} im Bereich von 3ms liegen.

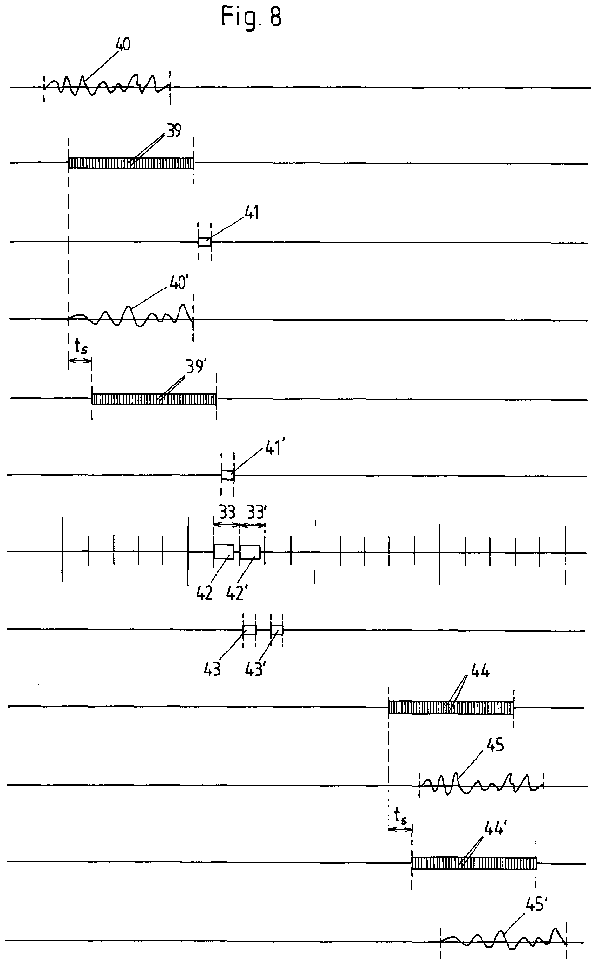

Fig. 8 zeigt als Beispiel die Übermittlung von Audiosignalen 40, 40' von zwei Sende-Audiostationen 5 an die Basisstation 7 in zwei Audio-Kanälen, wobei unterschiedliche Daten-Slots 33, 33' des Multiplex-Frames 32 zur Übertragung verwendet werden, d.h. es handelt sich um zwei Audio-Kanäle einer der Netzwerk-Einheiten 13 der Basisstation 7 (und nicht etwa unterschiedlicher Netzwerk-Einheiten 13 der Basisstation 7, welche unterschiedlichen Funkkanälen zugeordnet sind). Die Bildung der Samples 39, 39', Datenpakete 41, 41', Audio-Datenpakete 42, 42', Datenpakete 43, 43', Samples 44, 44' und Audiosignale 45, 45' erfolgt in der zuvor beschriebenen Weise, wobei für die Übertragung des Audio-signals 40' über den zum zweiten Daten-Slot 33' gehörenden Audio-Kanal noch folgendes zu beachten ist:

Beim Paketieren der Audiosignale 40, 40' senderseitig werden Samples 39, 39' herangezogen, die aus Abtastintervallen stammen, welche zueinander einen Zeitversatz t_{S} aufweisen. Der gleiche Zeitversatz t_{S} wird beim Entpacken der digitalen Samples 44, 44' empfängerseitig herangezogen. Es kann dadurch bei strenger Beibehaltung der gegenseitigen Phasenlagen der über die unterschiedlichen Audio-Kanäle übermittelten Audiosignale 40, 40' die gesamte Zeitverzögerung t_{d} minimiert werden.

Für jeden der den aufeinanderfolgenden Daten-Slots 33 zugeordneten Audio-Kanäle wird jeweils ein solcher Zeitversatz t_{S} durchgeführt. Der Zeitversatz zwischen dem dem dritten Daten-Slot 33 zugeordneten Audio-Kanal und dem dem ersten Daten-Slot 33 zugeordneten Audio-Kanal entspricht also dem zweifachen Wert von t_{S} und der Zeitversatz zwischen dem dem vierten Daten-Slot 33 zugeordneten Audio-Kanal und dem dem ersten Daten-Slot 33 zugeordneten Audio-Kanal entspricht also dem dreifachen Wert von t_{S}.

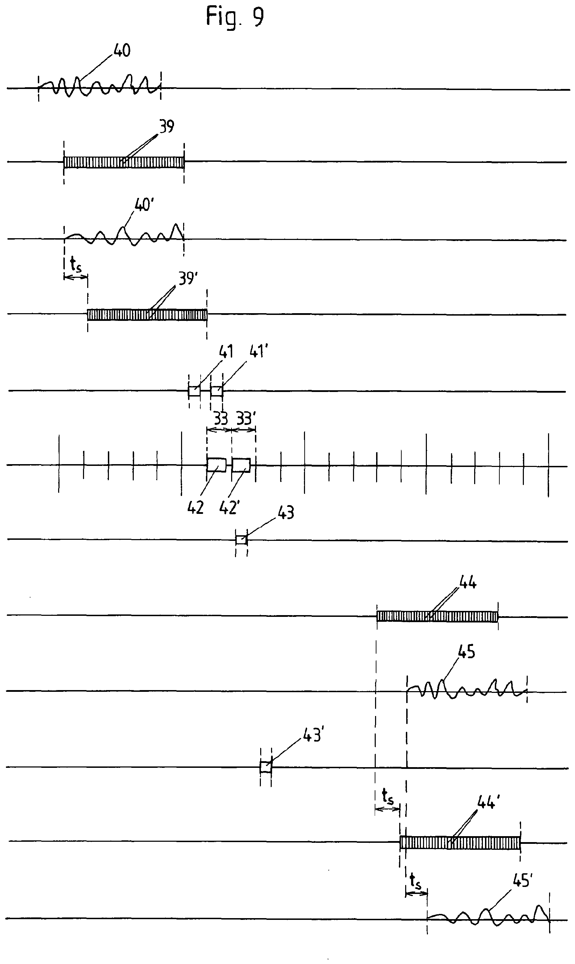

In analoger Weise erfolgt die Übertragung eines oder mehrerer Audiosignale 40, 40' in einem oder mehreren Audio-Kanälen einer jeweiligen Netzwerk-Einheit 13 der Basisstation 7 von der Basisstation 7 zu einer Empfangs-Audiostation 6, wie dies in Fig. 9 beispielhaft für zwei Audio-Kanäle dargestellt ist. Die Samples 39, 39' und die Datenpakete 41, 41' werden hier von der Audio-Einheit 14 der Basisstation 7 gebildet. Die von der Netzwerk-Einheit 13 gebildeten Audio-Datenpakete 42, 42' werden in unterschiedlichen (im gezeigten Übertragungsbeispiel aufeinanderfolgenden) Daten-Slots 33, 33' an die Netzwerk-Einheiten 28 der beiden Empfangs-Audiostationen 6 drahtlos übertragen und als Datenpakete 43, 43' den Audio-Einheiten 29 der beiden Empfangs-Audiostationen 6 übergeben, worauf - gegebenenfalls nach Durchführung einer Fehlerkorrektur - die Bildung der Samples 44, 44' und die Digital-Analog-Wandlung in die Audiosignale 45, 45' erfolgt. Beim Packen und Entpacken der Samples wird wiederum ein Zeitversatz t_{S}, 2 t_{S} oder 3 t_{S} entsprechend den belegten Daten-Slots 33 eingehalten.

Der Zeitversatz t_{S}, der für die Belegung von zwei aufeinanderfolgenden Daten-Slots 33 gilt, kann beispielsweise der Dauer t_{M} des Multiplex-Frames 32 geteilt durch die Anzahl der im Multiplex-Frame 32 enthaltenen Daten-Slots 33 (also der Kanalanzahl pro Netzwerk-Einheit 13) sein, oder auch kürzer, wobei ein Zeitversatz von zumindest der Hälfte des zuvor genannten Werts bevorzugt ist.

Um den Jitter der übertragenen Audiosignale möglichst gering zu halten, werden die Audio-Clocks 26, 30 der Audio-Einheiten 24, 29 aller Sende-Audiostationen 5 und Empfangs-Audiostationen 6, die mit der Basisstation 7 zur Übertragung von Audiosignalen kommunizieren, miteinander und mit dem in der Basisstation 7 eingesetzten Audioclock-Signal synchronisiert. Diese Synchronisation bedeutet, dass die Anzahl der Audio-Ticks (=Flanken) in den Audiostationen 5, 6 und in der Basisstation 7 in vorgegebenen Zeitintervallen ("Synchronisations-Intervallen"), beispielsweise über die doppelte Dauer t_{M} des Multiplex-Frames 32, einander entsprechen. Dadurch wird verhindert, dass Samples 44, 44' empfängerseitig verloren gehen bzw. die Synchronität zwischen den Audio-Kanälen beeinträchtigt wird. Die Phasenlagen der Audioclock-Signale in den einzelnen Audiostationen 5, 6 und in der Basisstation 7 müssen hierbei einander nicht entsprechen. Es handelt sich also um eine Art Frequenzsynchronisation und nicht etwa um eine Phasensynchronisation.

Zur Synchronisation der Audioclock-Signale, also der Anzahl der von ihnen erzeugten Audio-Ticks im Synchronisations-Intervall, werden vorzugsweise die im Service-Slot 34 der Multiplex-Frames 32 von der Basisstation 7 gesendeten und von der Audiostation 5, 6 empfangenen System-Datenpakete 46 in der jeweiligen Audiostation 5, 6 herangezogen, wobei, wie ausgeführt, nicht in jedem Service-Slot 34 von aufeinanderfolgenden Multiplex-Frames 32 von der Basisstation 7 System-Datenpakete 46 gesendet werden müssen, vorzugsweise ein Senden solcher System-Datenpakete 46 in jedem zweiten Service-Slot 34 erfolgt.

Die Synchronisation der Audioclock-Signale anhand der von der Basisstation 7 übermittelten System-Datenpakete 46 kann auf unterschiedliche Weise erfolgen. In einer möglichen Ausführungsform wird in der jeweiligen Audiostation 5, 6 der Empfangszeitpunkt des System-Datenpakets bzw. des Beginns des System-Datenpakets erfasst. Da das Senden der System-Datenpakete 46 in einer fixen Relation zur vorgegebenen Frame-Struktur erfolgt (insbesondere wie beschrieben zu Beginn des jeweiligen Service-Slots, in welchem das System-Datenpaket gesendet wird), und die Frequenz des Audioclock-Signals der Basisstation einen bekannten vorgegebenen Wert hat, steht der Sollwert der Anzahl der zwischen den Empfangszeitpunkten der System-Datenpakete von der Audio-Clock 26, 30 der jeweiligen Audiostation auszugebenden Audio-Ticks fest und somit kann anhand dieses Sollwerts das Register der jeweiligen Audio-Clock 26, 30 nach jedem ausgewerteten Empfang eines System-Datenpakets entsprechend aktualisiert werden, um den Istwert der zwischen zwei Empfangszeitpunkten ausgegebenen Audio-Ticks mit dem Sollwert in Übereinstimmung zu bringen.

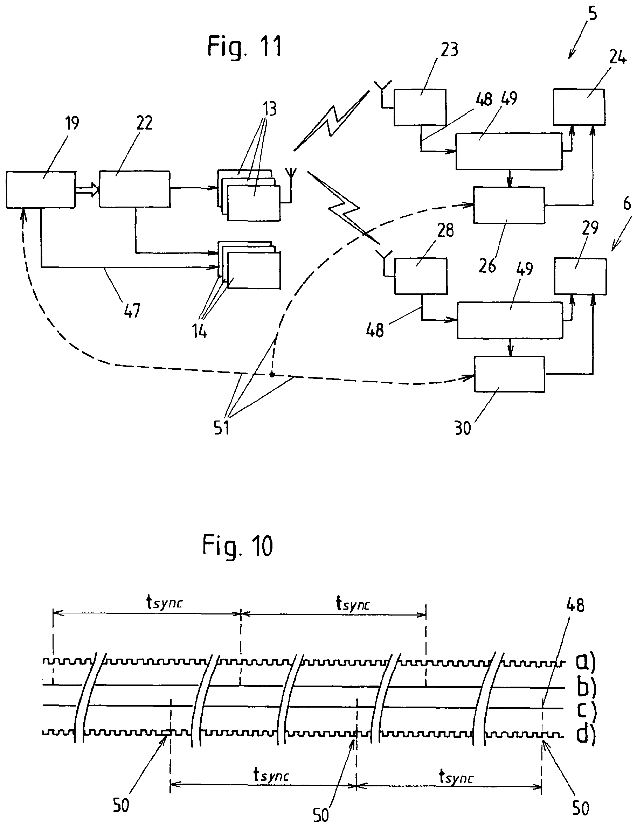

Dieser Vorgang der Synchronisation ist in Fig. 10 dargestellt. In Fig. 10a ist das Audio-clock-Signal der Basisstation 7 eingezeichnet, in Fig. 10b die Zeitpunkte, zu denen von der Basisstation 7 System-Datenpakete 46 ausgesendet werden. Fig. 10c zeigt den durch Auswertung der Empfangszeitpunkte der System-Datenpakete 46 von der Audiostation 5, 6 erhaltenen Synchronisations-Tick 48. Fig. 10d zeigt die Synchronisation der Audio-Clock 26, 30 der Audiostation 5, 6 anhand dieses Synchronisations-Ticks 48. Die Synchronisations-Stellen 50 sind ebenso wie das Synchronisations-Intervall t_{sync} bezeichnet. Wenn nur in jedem zweiten oder jedem n-ten Service-Slot 34 von der Basisstation 7 System-Datenpakete 46 übermittelt werden, so erfolgt die Synchronisation in den entsprechenden Intervallen.

Eine weitere besonders bevorzugte Möglichkeit zur Synchronisation der Audioclock-Signale anhand der System-Datenpakete 46 besteht darin, dass mit den System-Datenpaketen 46 die Zeitinformation ("time stamp") übermittelt wird, wann das jeweilige System-Datenpaket 46 von der Basisstation 7 abgesandt worden ist. Diese Zeitinformation wird bei Beacons von WLAN-Netzwerken mitgesandt, um eine synchronisierte Zeitbasis für das Senden und Empfangen von Datenpaketen über die Luftschnittstelle bereitzustellen. Anhand dieser mitgesandten Zeitinformationen kann somit für nacheinander empfangene System-Datenpakete einerseits die Zeitdauer zwischen diesen System-Datenpaketen gemäß der Zeitbasis der Basisstation 7, andererseits die Zeitdauer zwischen diesen System-Datenpaketen entsprechend der von der Audio-Clock der Audiostation bereitgestellten Zeitbasis festgestellt werden und aufgrund des Vergleiches die Audio-Clock der Audiostation entsprechend nachjustiert werden.

Hierbei wird in einer möglichen Ausführungsform ein in der jeweiligen Audiostation 5, 6 vorhandener Synchronisationstimer, der ein periodisches Signal erzeugt, mittels einer jeweiligen "Time-Stamp" abgeglichen, also frequenzsynchronisiert. Das periodische Ausgangssignal dieses Synchronisationstimers wird benutzt, um die Audio-Clock dieser Audiostation nachzujustieren, also in ihrer Frequenz mit der Frequenz der Audio-Clock der Basisstation zu synchronisieren. Hierzu wird das Ausgangssignal des Synchronisationstimers, das ein Trigger-Signal darstellt, der Synchronisations-Einheit zugeführt. Diese regelt die Audio-Clock mit einer PLL (Phase-Locked-Loop) nach.

Denkbar und möglich wäre es beispielsweise auch, mit den Time-Stamps direkt die Audio-Clock zu synchronisieren, wobei diese dann durch einen digital eingespeisten Wert verstellbar sein müsste.

Ein Vorteil der Synchronisation der Audio-Clock mittels der mitgesandten Time-Stamps besteht in der Stabilität des Systems. Auch wenn es beispielsweise bei der Übermittlung der System-Datenpakete (bzw. Audio-Datenpakete) zu einer Zeitverzögerung kommen sollte, so gibt die Time-Stamp dennoch den Zeitpunkt an, zu dem das Datenpaket hätte übermittelt werden sollen.

Die genannten Synchronisationen der Audio-Clocks 19, 30 werden, wie ausgeführt, dadurch ermöglicht, dass die System-Datenpakete 46 zu Zeitpunkten versandt werden, die in definierter Relation zur Frame-Struktur, also auch zum Audioclock-Signal der Basisstation 7 stehen, wobei diese definierte Relation in den Audiostationen 5, 6 zur Synchronisation der Audio-Clock 19, 30 der jeweiligen Audiostation herangezogen wird.

Denkbar und möglich ist es auch, anstelle der System-Datenpakete oder zusätzlich hierzu die Audio-Datenpakete bzw. ein bestimmtes der Audio-Datenpakete im Multiplex-Frame zur Synchronisation heranzuziehen. Diese Audio-Datenpakete werden ebenfalls zu Zeitpunkten versandt, die in definierter Relation zur Frame-Struktur, also auch zum Audio-clock-Signal der Basisstation 7 stehen, sodass die Audio-Datenpakete in analoger Weise wie für die System-Datenpakete beschrieben zur Synchronisation herangezogen werden können. Beispielsweise können die Empfangszeitpunkte der Audio-Datenpakete in einem bestimmten Daten-Slot oder mehreren bestimmten Daten-Slots ausgewertet werden oder es können mit den betreffenden Audio-Datenpaketen Time-Stamps mitgeschickt werden, die zur Synchronisation herangezogen werden.

Das bezüglich der Audio-Clocks über die Luftschnittstelle synchronisierte System ist in Fig. 11 nochmals schematisch dargestellt. Das Referenz-Audioclock-Signal der Basisstation wird von der Audio-Clock 19 erzeugt, die in die Basisstation 7 integriert ist oder die extern angeordnet sein kann, wobei ihr Signal einem Eingang der Basisstation 7 zugeführt wird. Der von der Audio-Clock 19 erzeugte Audio-Tick 47 wird den Audio-Einheiten 14 der Basisstation 7 zugeführt. Aus dem Audioclock-Signal der Audio-Clock 19 wird durch den Teiler 22 ein Multiplex-Frame-Tick 48 erzeugt, der den Beginn eines jeweiligen Multiplex-Frames 32 anzeigt, und den Audio-Einheiten 14 bzw. - gegebenenfalls nochmals geteilt zu einem Hyper-Frame-Tick 49 - den Netzwerk-Einheiten 13 zugeführt (in denen aus dem Hyper-Frame-Tick wiederum der Multiplex-Frame-Tick gewonnen werden kann).

In den Netzwerk-Einheiten 23, 28 der Audiostationen 5, 6 wird anhand der von der Basisstation 7 empfangenen System-Datenpakete und/oder Audio-Datenpakete ein Synchronisations-Tick 48 erhalten, der einem vielfachen des Multiplex-Frame-Ticks 36 der Basisstation 7 entspricht. Anstelle eines von einem periodischen Signal gebildeten Synchronisations-Ticks 48 ist es z.B. auch denkbar und möglich Synchronisationsdaten von den aus dem jeweiligen System-Datenpaket 46 und/oder Audio-Datenpaket ausgelesenen Wert der jeweiligen Time-Stamp zu erhalten. Anhand des Synchronisations-Ticks 48 (oder anhand von Synchronisationsdaten) wird von den Synchronisations-Einheiten 49 (diese können von Komponenten der Netzwerk-Einheit 23, 28 und/oder der Audio-Einheit 24, 29 gebildet werden) die Synchronisierung der Audio-Clock 26, 30 der jeweiligen Audiostation 5, 6 durchgeführt, deren synchronisiertes Audioclock-Signal der Audio-Einheit 24, 29 der jeweiligen Audiostation 5, 6 zugeführt wird, um zum Sampling bzw. Desampling des Audiosignals herangezogen zu werden. Die Synchronisierung der zueinander isochronen Audio-Clocks 19, 26, 30 ist durch die strichliert dargestellten, miteinander verbundenen Pfeile 51 angedeutet.

Mittels des Synchronisations-Ticks 48 oder den Synchronisationsdaten erfolgt auch die Synchronisation der Frame-Struktur der jeweiligen Audiostation 5, 6 mit der Basisstation 7. Kleinere Phasenabweichungen zwischen den Multiplex-Frames 32 der einzelnen Stationen 5, 6, 7 sind hierbei unkritisch, solange diese die Übertragung der Datenpakete im Zeitmultiplexverfahren nicht beeinträchtigen.

Zur Fehlerkorrektur bei der Übertragung von Audio-Datenpaketen 42, 42' ist es weiters bevorzugt, das in jedem Audio-Datenpaket 42, 42' auch Informationen zumindest über die im unmittelbar zuvor übermittelten Audio-Datenpaket 42, 42' enthaltenen Nutzdaten zusätzlich aufgenommen werden. Nutzdaten können auch von mehr als einem zurückliegenden Audio-Datenpaket 42, 42' übernommen werden. Falls somit ein (oder mehr als ein) Audio-Datenpaket 42, 42' nicht korrekt übertragen wird, so können aus dem nächsten übertragenen Audio-Datenpaket 42, 42' die nicht übertragenen Nutzdaten oder zumindest ein Teil hiervon entnommen werden.

Beispielsweise können in jedem Audio-Datenpaket 42, 42' die Audio-Nutzdaten des vorherigen Audio-Datenpakets 42, 42' und die Hälfte der Audio-Nutzdaten, beispielsweise entsprechend jedem zweiten Sample 44, 44', des vor - vorherigen Audio-Datenpakets 42, 42' übertragen werden.

Diese Fehlerkorrektur kann beispielsweise ebenfalls im Zeitraum t₄ oder in den Zeiträumen t₃ und t₄ durchgeführt werden.

In den zuvor beschriebenen Ausführungsbeispielen erfolgt eine Übertragung von Nutzdaten immer zwischen der Basisstation und (zumindest) einer Audiostationen. Denkbar und möglich ist es auch, dass mindestens ein Audiosignal in mindestens einem Audio-Kanal direkt zwischen zwei Audiostationen 5, 6 übertragen wird. Die Basisstation würde hierbei als Kontroll- und Synchronisationsstation für diese Kommunikation zwischen den Audiostationen dienen. Die Audiostationen könnten hierbei entweder nur als Sende- oder Empfangsstationen oder, zumindest teilweise, sowohl als Sende- und Empfangsstation ausgebildet sein.

Denkbar und möglich ist es auch, dass ein erfindungsgemäßer Aufbau nur Empfangs-Audiostationen aufweist, an die von einer Basisstation mindestens ein Audiosignal, vorzugsweise zwei oder mehr Audiosignale in zwei oder mehr Audio-Kanälen, übermittelt wird, oder dass nur Sende-Audiostationen 5 vorhanden sind, von denen Audiosignale an die Basisstation übermittelt werden. Beispielsweise bei Bühnenanwendungen sind aber sowohl Sende-Audiostationen als auch Empfangs-Audiostationen oder, zumindest teilweise, kombinierte Sende-Empfangs-Audiostationen vorgesehen.

Weiters ist es denkbar und möglich, dass ein Aufbau, bei dem das erfindungsgemäße Verfahren durchgeführt wird, mehrere Basisstationen 7 umfasst, die miteinander synchronisiert sind. Beispielsweise kann hierzu das gleiche Audioclock-Signal aller Basisstationen von außen kabelgebunden zugeführt sein oder das Audioclock-Signal einer der Basisstationen wird auch den anderen Basisstationen kabelgebunden (drahtgebunden) zugeführt. Auch eine Synchronisierung der Audioclock-Signale der Basisstationen über die Luftschnittstelle ist denkbar und möglich, beispielsweise in der im Zusammenhang mit der Synchronisierung der Audioclock-Signale der Audiostationen 5, 6 beschriebenen Form, wobei eine der Basisstation die "Master-Basisstation" darstellt, zu der alle anderen Stationen (Basisstationen und Audiostationen) synchronisiert werden.

Zuvor wurden Ausführungsbeispiele beschrieben, bei denen die Eingaben und Ausgaben der Audiosignale bei den Audiostationen 5, 6 und bei der Basisstation 7 jeweils analog erfolgt sind. Stattdessen ist es denkbar und möglich, dass die Eingabe und Ausgabe eines jeweiligen Audiosignals digital erfolgt. Auch Kombinationen hiervon sind möglich, z.B. könnte ein bestimmtes Audiosignal einer der Audiostationen oder der Basisstation drahtgebunden digital zugeführt werden und die Ausgabe des über die Luftschnittstelle übermittelten Audiosignals an der Basisstation oder an einer der Audiostationen analog erfolgen. Auch die Umkehrung hiervon ist möglich (analoge Zuführung - digitale Ausgabe). Darüber hinaus kann für einen Teil der Audiosignale eine digitale Zuführung und/oder Ausgabe und für einen anderen Teil der Audiosignale eine analoge Zuführung und/oder Ausgabe vorgesehen sein.

So könnte beispielsweise die Basisstation 7 mit einem digitalen Mischpult 8 drahtgebunden verbunden sein (hierbei ist auch eine Integration der beiden Geräte in einem gemeinsamen Gerät möglich) und/oder einer Sende-Audiostation 5 von einem angeschlossenen oder integrierten Gerät 1, 2, 3 ein digitales Audiosignal drahtgebunden zugeführt werden und/oder von einer Empfangs-Audiostation 6 an ein angeschlossenes oder integriertes Gerät 4 ein digitales Audiosignal drahtgebunden ausgegeben werden.

Falls ein digitales Audiosignal einzulesen oder auszugeben ist, so erfolgt die Übertragung zwischen der Basisstation und zumindest einer Audiostation und/oder zwischen zwei oder mehr Audiostationen in analoger Weise wie beschrieben, nur dass in diesem Fall das Audio-clock-Signal nicht zur Digital-Analog-Wandlung oder Analog-Digital-Wandlung sondern zur Vorgabe der Rate herangezogen wird, mit der die digitalen Samples ein- bzw. ausgelesen werden. Das angeschlossene (oder integrierte) Gerät verwendet die gleiche Rate zur Ausgabe bzw. Eingabe der digitalen Samples, wobei diesem Gerät hierzu das Audioclock-Signal insbesondere drahtgebunden zugeführt werden kann.

So trifft beispielsweise die Beschreibung der Fig. 7 in analoger Weise zu, nur dass die Zuführung des analogen Signals entsprechend Fig. 7a entfällt und gleich digitale Samples 39 entsprechend Fig. 7b mit der durch das Audioclock-Signal vorgegebenen Rate eingelesen werden bzw. dass die Ausgabe des analogen Signals entsprechend Fig. 7g entfällt und gleich die digitalen Samples 44 entsprechend Fig. 7f mit der vom Audioclock-Signal vorgegebenen Rate ausgegeben werden. Entsprechendes gilt, wenn entweder nur die Zuführung oder nur die Ausgabe digital erfolgt.

Das Analoge gilt auch für die Beschreibung der Fig. 8 und 9.

Im Gegensatz zu herkömmlichen WLAN-Anwendungen muss beim erfindungsgemäßen Verfahren der Empfang von Nutzdatenpaketen vom Empfänger nicht bestätigt werden, und vorzugsweise wird eine solche Bestätigung auch nicht durchgeführt, entsprechend den beschriebenen Ausführungsbeispielen.

Der Abstand zwischen von der Basisstation 7 in den Service-Slots 34 übermittelten System-Datenpakete beträgt günstigerweise weniger als 5ms, wobei ein Wert von weniger als 2ms bevorzugt ist.

Vorteile der Erfindung sind eine hohe Audioqualität, wobei eine große Anzahl von Audio-Kanälen, beispielsweise 20, zur Übertragung von Audiosignalen bereitgestellt werden kann.

Vom Eingang zum Ausgang kann hierbei eine geringe Verzögerung erreicht werden, beispielsweise von weniger als 5ms, vorzugsweise weniger als 3ms.

Der Versatz zwischen den Kanälen untereinander kann weniger als 5µs, vorzugsweise weniger als 2µs betragen.

### Legende zu den Hinweisziffern:

| | | | |
|---|---|---|---|
| 1 | Audiosignalquelle | 32 | Multiplex-Frame |
| 2 | Audiosignalquelle | 33, 33' | Daten-Slot |
| 3 | Audiosignalquelle | 34 | Service-Slot |
| 4 | Audio-Wiedergabegerät | 35 | Hyper-Frame |
| 5 | Sende-Audiostation | 36 | Multiplex-Frame-Tick |
| 6 | Empfangs-Audiostation | 37 | Hyper-Frame-Tick |
| 7 | Basisstation | 38 | Audio-Ausgang |
| 8 | Mischpult | 39, 39' | Sample |
| 9 | Audio-Ausgang | 40, 40' | Audiosignal |
| 10 | Audio-Eingang | 41, 41' | Datenpaket |
| 11 | Steuergerät | 42, 42' | Audio-Datenpaket |
| 12 | Funkkanal-Einheit | 43, 43' | Datenpaket |
| 13 | Netzwerk-Einheit | 44, 44' | Sample |
| 14 | Audio-Einheit | 45, 45' | Audiosignal |
| 15 | System-Kontrolleinheit | 46 | System-Datenpaket |
| 16 | Antenne | 47 | Audio-Tick |
| | | 48 | Synchronisations-Tick |
| | | 49 | Synchronisations-Einheit |
| 19 | Audio-Clock | 50 | Synchronisations-Stelle |
| 20 | Netzwerk-Einheit | 51 | Pfeil |
| 21 | Anschluss | | |
| 22 | Teiler | | |
| 23 | Netzwerk-Einheit | | |
| 24 | Audio-Einheit | | |
| 25 | Audio-Eingang | | |
| 26 | Audio-Clock | | |
| 27 | Synchronisations-Einheit | | |
| 28 | Netzwerk-Einheit | | |
| 29 | Audio-Einheit | | |
| 30 | Audio-Clock | | |
| 31 | Synchronisations-Einheit | | |

## Patentansprüche

1. Verfahren zur drahtlosen Echtzeitübertragung zumindest eines Audiosignales in zumindest einem Audio-Kanal von mindestens einer Sende-Audiostation (5) zu einer zentralen Basisstation (7) und zumindest eines weiteren Audiosignals in zumindest einem weiteren Audio-Kanal von der zentralen Basisstation (7) zu einer Empfangs-Audiostation (6), wobei die mindestens eine Sende-Audiostation (5) mindestens eine Netzwerk-Einheit (23) zum drahtlosen Senden von Audio-Datenpaketen über zumindest einen Funk-Kanal und mindestens eine Audio-Einheit (24) aufweist, von der mit einer von einem Audioclock-Signal vorgegebenen Rate zumindest ein dieser Sende-Audiostation (5) drahtgebunden zugeführtes analoges Audiosignal (40, 40') unter Bildung digitaler Samples (39, 39') digitalisiert wird und/oder zumindest ein dieser Sende-Audiostation (5) drahtgebunden zugeführtes digitales Audiosignal eingelesen wird, und die mindestens eine Empfangs-Audiostation (6) mindestens eine Netzwerk-Einheit (28) zum drahtlosen Empfangen von Audio-Datenpaketen über zumindest einen Funk-Kanal und mindestens eine Audio-Einheit (29) aufweist, von der mit einer von einem Audioclock-Signal vorgegebenen Rate digitale Samples (44, 44') zumindest eines von dieser Empfangs-Audiostation (6) über den Funk-Kanal oder einen der Funk-Kanäle empfangenen Audiosignals in ein analoges Audiosignal (45, 45') gewandelt werden und/oder digitale Samples zumindest eines von dieser Empfangs-Audiostation (6) über den Funk-Kanal oder einen der Funk-Kanäle empfangenen Audiosignals drahtgebunden ausgegeben werden, und wobei die Basisstation (7) zumindest eine Netzwerk-Einheit (13) zum drahtlosen Senden und Empfangen von Audio-Datenpaketen und mindestens eine Audio-Einheit (14) aufweist, von der zumindest ein Audiosignal analog-digital und/oder digital-analog gewandelt werden kann, und von der Basisstation (7) in mindestens einem sich regelmäßig wiederholenden Service-Slot (34) System-Datenpakete (46) an die Sende- und Empfangs-Audiostationen (5, 6) übermittelt werden, **dadurch gekennzeichnet, dass** die Übertragung der Audiosignale (40, 40') zwischen der zentralen Basisstation (7) und den Audiostationen (5, 6) in einem synchronen Zeitmultiplexverfahren erfolgt, wobei von den zur Übertragung von Audiosignalen miteinander kommunizierenden Netzwerk-Einheiten (13, 23, 28) Audiosignale (40, 40') in zwei oder mehr Audio-Kanälen über den gleichen Funk-Kanal übertragbar sind und hierbei jedem Audio-Kanal ein Daten-Slot (33, 33'), in welchem die Audio-Datenpakete (42, 42') übermittelt werden, innerhalb eines sich regelmäßig wiederholenden Multiplex-Frames (32) zugeteilt ist und der Multiplex-Frame (32) weiters den mindestens einen Service-Slot (34) aufweist, und dass das Audioclock-Signal der jeweiligen Audiostation (5, 6) unter Heranziehung der von der Basisstation (7) in mindestens einem Service-Slot (34) übermittelten System-Datenpakete (46) und/oder der von der Basisstation (7) in mindestens einem Daten-Slot (33, 33') übermittelten Audio-Datenpakete (42, 42') mit einem Audioclock-Signal der Basisstation (7) synchronisiert wird, wobei die über einen jeweiligen vorgegebenen Zeitraum ausgegebene Anzahl von Audio-Ticks dieser Audiostation (5, 6) mit der über den gleichen Zeitraum ausgegebenen Anzahl von Audio-Ticks der Basisstation (7) in Übereinstimmung gebracht wird.

2. Verfahren nach Anspruch 1, **dadurch gekennzeichnet, dass** von der mindestens einen Audio-Einheit (14) der Basisstation (7) mit einer vom Audioclock-Signal der Basisstation (7) vorgegebenen Rate zumindest ein der Basisstation (7) drahtgebunden zugeführtes, an die mindestens eine Empfangs-Audiostation (6) über den Funk-Kanal oder einen der Funk-Kanäle zu sendendes analoges Audiosignal (40, 40') unter Bildung digitaler Samples (39, 39') digitalisiert wird und/oder zumindest ein der Basisstation (7) drahtgebunden zugeführtes, an die mindestens eine Empfangs-Audiostation (6) über den Funk-Kanal oder einen der Funk-Kanäle zu sendendes digitales Audiosignal eingelesen wird und dass von der mindestens einen Audio-Einheit (14) der Basisstation (7) mit der vom Audioclock-Signal der Basisstation (7) vorgegebenen Rate digitale Samples (44, 44') zumindest eines von der Sende-Audiostation (5) über den Funk-Kanal oder einen der Funk-Kanäle an die Basisstation (7) gesendeten Audiosignals (45, 45') in ein analoges Audiosignal (45, 45') gewandelt werden und/oder digitale Samples zumindest eines von der Sende-Audiostation (5) über den Funk-Kanal oder über einen der Funk-Kanäle an die Basisstation (7) gesendeten Audiosignals drahtgebunden ausgegeben werden.

3. Verfahren nach Anspruch 2, **dadurch gekennzeichnet, dass** die Basisstation (7) zwei oder mehr Audio-Einheiten (14) aufweist, in denen die Raten zur Digital-Analog-Wandlung und/oder zur Analog-Digital-Wandlung und/oder zum Ausgeben und/oder zum Einlesen der zu wandelnden bzw. auszugebenden bzw. einzulesenden Audiosignale vom gleichen Audioclock-Signal vorgegeben sind oder von zueinander synchronisierten Audioclock-Signalen vorgegeben sind.

4. Verfahren nach einem der Ansprüche 1 bis 3, **dadurch gekennzeichnet, dass** die Basisstation (7) zwei oder mehr Netzwerk-Einheiten (13) aufweist, wobei von jeder der Netzwerk-Einheiten (13) auf einem eigenen Funk-Kanal, der sich von dem von den anderen Netzwerk-Einheiten (13) verwendeten Funk-Kanal unterscheidet, unter Verwendung des synchronen Zeitmultiplexverfahrens Audio-Signale in zwei oder mehr Audio-Kanälen übertragbar sind und hierbei jedem Audio-Kanal ein Datenslot (33, 33') innerhalb des sich regelmäßig wiederholenden Multiplex-Frames (32) zugeteilt ist und der Multiplex-Frame (32) weiters den mindestens einen Service-Slot (34) aufweist, und dass die Multiplex-Frames (32) der einzelnen Netzwerk-Einheiten (13) zeitlich übereinstimmen.

5. Verfahren nach Anspruch 4, **dadurch gekennzeichnet, dass** die Basisstation (7) eine System-Kontrolleinheit (15) aufweist, die Kontrollfunktionen für die Netzwerk-Einheiten (13) der Basisstation (7) übernimmt, vorzugsweise zumindest den Netzwerk-Einheiten (13) jeweilige Funk-Kanäle zuweist.

6. Verfahren nach einem der Ansprüche 1 bis 5, **dadurch gekennzeichnet, dass** beim senderseitigen Paketieren der digitalisierten analogen Audiosignale (40, 40') und/oder der eingelesenen, drahtgebunden zugeführten digitalen Audiosignale der einzelnen Audio-Kanäle Samples (44, 44') herangezogen werden, die aus Abtastintervallen stammen, welche Zeitversätze (t5) zwischen den Audio-Kanälen aufweisen, und dass diese Zeitversätze (t_{S}) zwischen den Audio-Kanälen auch beim empfangsseitigen Entpacken der digitalen Samples (44, 44') nach der drahtlosen Übertragung herangezogen werden, wobei die entpackten digitalen Samples (44, 44') wieder in analoge Audiosignale (45, 45') gewandelt und/oder drahtgebunden ausgegeben werden.

7. Verfahren nach einem der Ansprüche 1 bis 6, **dadurch gekennzeichnet, dass** eine vorgegebene Anzahl von Multiplex-Frames (32) zu einem Hyper-Frame (35) zusammengefasst wird, wobei innerhalb eines Hyper-Frames (35) die Service-Slots (34) teilweise zur Übermittlung von System-Datenpaketen (46) von der Basisstation (7) zu den Audiostationen (5, 6) und teilweise zur Übermittlung von System-Datenpaketen von den Audio-stationen (5, 6) zur Basisstation (7) herangezogen werden.

8. Verfahren nach einem der Ansprüche 1 bis 7, **dadurch gekennzeichnet, dass** die Multiplex-Frames (32) der Netzwerk-Einheiten (23, 28) der Audiostation (5, 6) mit den Multiplex-Frames (32) der mindestens einen Netzwerk-Einheit (13) der Basisstation (7) unter Heranziehung der von der Basisstation (7) in mindestens einem Service-Slot (34) übermittelten System-Datenpakete (46) und/oder der von der Basisstation (7) in mindestens einem Daten-Slot (33, 33') übermittelten Audio-Datenpakete (42, 42') zeitlich synchronisiert werden.

9. Verfahren nach einem der Ansprüche 1 bis 8, **dadurch gekennzeichnet, dass** Empfangs-Audiostationen (6), die nur zum Empfangen zumindest eines Audiosignals ausgebildet sind, und Sende-Audiostationen (5), die nur zum Senden zumindest eines Audiosignals ausgebildet sind, eingesetzt werden.

10. Verfahren nach einem der Ansprüche 1 bis 9, **dadurch gekennzeichnet, dass** das von einer der Stationen (5, 6, 7) in einem jeweiligen Audio-Kanal gesendete Audiosignal nur an eine einzelne der anderen Stationen (5, 6, 7) übermittelt wird.

11. Verfahren nach einem der Ansprüche 1 bis 10, **dadurch gekennzeichnet, dass** von einer jeweiligen Netzwerk-Einheit (13) der Basisstation (7) und von einer jeweiligen Netzwerk-Einheit (23, 28) einer jeweiligen Audiostation (5, 6) ein PHY eines WLAN gebildet wird, vorzugsweise mit einem OFDM-Modulationsverfahren.

12. Verfahren nach einem der Ansprüche 1 bis 11, **dadurch gekennzeichnet, dass** zur Synchronisation des Audioclock-Signals der jeweiligen Audiostation (5, 6) mit dem Audio-clock-Signal der Basisstation (7) Zeitinformationen, die mit den von der Basisstation (7) übermittelten System-Datenpaketen (46) und/oder Audio-Datenpaketen (42, 42') mitgesandt werden und den Absendezeitpunkt des jeweiligen System-Datenpakets (46) bzw. Audio-Datenpaket (42, 42') angeben, herangezogen werden.

13. Verfahren nach Anspruch 12, **dadurch gekennzeichnet, dass** mit einer jeweiligen empfangenen Zeitinformation ein Synchronisationstimer der Audiostation (5, 6) aktualisiert wird, dessen Ausgangssignal wiederum zur Aktualisierung des Audioclock-Signals der Audiostation (5, 6) herangezogen wird.

14. Verfahren nach einem der Ansprüche 1 bis 13, **dadurch gekennzeichnet, dass** zur Synchronisation des Audioclock-Signals der jeweiligen Audiostation (5, 6) mit dem Audio-clock-Signal der Basisstation (7) die jeweiligen Empfangszeitpunkte der von der Basisstation (7) übermittelten System-Datenpakete (46) und/oder Audio-Datenpakete (42, 42') herangezogen werden.

15. Verfahren nach einem der Ansprüche 1 bis 14, **dadurch gekennzeichnet, dass** eine jeweilige Audio-Einheit (14) der Basisstation (7) zum wahlweisen Analog-Digital- und Digital-Analog-Wandeln ausgebildet ist.

## Claims

1. Method for wireless real-time transmission of at least one audio signal in at least one audio channel from at least one transmitting audio station (5) to a central base station (7) and of at least one further audio signal in at least one further audio channel from the central base station (7) to a receiving audio station (6), wherein the at least one transmitting audio station (5) has at least one network unit (23) for wirelessly transmitting audio data packets via at least one radio channel and has at least one audio unit (24) by which at least one analogue audio signal (40, 40') that is fed by wire to said transmitting audio station (5) is digitized at a rate predefined by an audio clock signal, digital samples (39, 39') thereby being formed, and/or at least one digital audio signal that is fed by wire to said transmitting audio station (5) is read in, and the at least one receiving audio station (6) has at least one network unit (28) for wirelessly receiving audio data packets via at least one radio channel and has at least one audio unit (29) by which digital samples (44, 44') of at least one audio signal that is received by said receiving audio station (6) via the radio channel or one of the radio channels are converted into an analogue audio signal (45, 45') at a rate predefined by an audio clock signal and/or digital samples of at least one audio signal that is received by said receiving audio station (6) via the radio channel or one of the radio channels are output by wire, and wherein the base station (7) has at least one network unit (13) for wirelessly transmitting and receiving audio data packets and has at least one audio unit (14) by which at least one audio signal can be converted from analogue to digital and/or from digital to analogue, and system data packets (46) are sent from the base station (7) to the transmitting and receiving audio stations (5, 6) in at least one regularly repeating service slot (34), **characterized in that** the transmission of the audio signals (40, 40') between the central base station (7) and the audio stations (5, 6) takes place in a synchronous time division multiplexing process, wherein audio signals (40, 40') can be transmitted in two or more audio channels via the same radio channel by the network units (13, 23, 28) which communicate with one another for the purpose of transmitting audio signals, and each audio channel is assigned a data slot (33, 33'), in which the audio data packets (42, 42') are sent, within a regularly repeating multiplex frame (32), and the multiplex frame (32) further contains the at least one service slot (34), and **in that** the audio clock signal of the respective audio station (5, 6) is synchronized with an audio clock signal of the base station (7) by using the system data packets (46) that are sent from the base station (7) in at least one service slot (34) and/or the audio data packets (42, 42') that are sent from the base station (7) in at least one data slot (33, 33'), wherein the number of audio ticks of said audio station (5, 6) that are output over a respective predefined duration is brought into correspondence with the number of audio ticks of the base station (7) that are output over the same duration.

2. Method according to claim 1, **characterized in that**, by the at least one audio unit (14) of the base station (7), at least one analogue audio signal (40, 40') that is fed by wire to the base station (7) and is to be transmitted to the at least one receiving audio station (6) via the radio channel or one of the radio channels is digitized at a rate predefined by the audio clock signal of the base station (7), digital samples (39, 39') thereby being formed, and/or at least one digital audio signal that is fed by wire to the base station (7) and is to be transmitted to the at least one receiving audio station (6) via the radio channel or one of the radio channels is read in and that, by the at least one audio unit (14) of the base station (7), digital samples (44, 44') of at least one audio signal (45, 45') that is transmitted by the transmitting audio station (5) to the base station (7) via the radio channel or one of the radio channels are converted into an analogue audio signal (45, 45') at the rate predefined by the audio clock signal of the base station (7) and/or digital samples of at least one audio signal that is transmitted by the transmitting audio station (5) to the base station (7) via the radio channel or via one of the radio channels are output by wire.

3. Method according to claim 2, **characterized in that** the base station (7) has two or more audio units (14) in which the rates for the digital-to-analogue conversion and/or for the analogue-to-digital conversion and/or for the outputting and/or for the reading-in of the audio signals to be converted and/or to be output and/or to be read in are predefined by the same audio clock signal or are predefined by audio clock signals which are synchronized with one another.

4. Method according to one of claims 1 to 3, **characterized in that** the base station (7) has two or more network units (13), wherein audio signals can be transmitted in two or more audio channels by each of the network units (13) on a separate radio channel that differs from the radio channel used by the other network units (13), using the synchronous time division multiplexing process, and each audio channel is assigned a data slot (33, 33') within the regularly repeating multiplex frame (32) and the multiplex frame (32) further contains the at least one service slot (34), and **in that** the multiplex frames (32) of the individual network units (13) temporally coincide.

5. Method according to claim 4, **characterized in that** the base station (7) has a system control unit (15) which performs control functions for the network units (13) of the base station (7), preferably at least assigns respective radio channels to the network units (13).

6. Method according to one of claims 1 to 5, **characterized in that** samples (44, 44') originating from sampling intervals which have time offsets (t_{S}) between the audio channels are used in the transmitter-side packetization of the digitized analogue audio signals (40, 40') and/or of the digital audio signals of the individual audio channels that are fed by wire and read in, and **in that** said time offsets (t_{S}) between the audio channels are also used in the receiver-side unpacking of the digital samples (44, 44') after the wireless transmission, the unpacked digital samples (44, 44') being converted back into analogue audio signals (45, 45') and/or output by wire.

7. Method according to one of claims 1 to 6, **characterized in that** a predefined number of multiplex frames (32) are combined to form a hyper-frame (35), wherein within a hyper-frame (35) the service slots (34) are used in part for sending system data packets (46) from the base station (7) to the audio stations (5, 6) and in part for sending system data packets from the audio stations (5, 6) to the base station (7).

8. Method according to one of claims 1 to 7, **characterized in that** the multiplex frames (32) of the network units (23, 28) of the audio station (5, 6) are temporally synchronized with the multiplex frames (32) of the at least one network unit (13) of the base station (7) by using the system data packets (46) that are sent from the base station (7) in at least one service slot (34) and/or the audio data packets (42, 42') that are sent from the base station (7) in at least one data slot (33, 33').

9. Method according to one of claims 1 to 8, **characterized in that** use is made of receiving audio stations (6) which are designed only for receiving at least one audio signal, and of transmitting audio stations (5) which are designed only for transmitting at least one audio signal.

10. Method according to one of claims 1 to 9, **characterized in that** the audio signal transmitted by one of the stations (5, 6, 7) in a respective audio channel is sent only to one of the other stations (5, 6, 7).

11. Method according to one of claims 1 to 10, **characterized in that** a PHY of a WLAN is formed by a respective network unit (13) of the base station (7) and by a respective network unit (23, 28) of a respective audio station (5, 6), preferably by means of an OFDM modulation process.

12. Method according to one of claims 1 to 11, **characterized in that** time information which is transmitted along with the system data packets (46) and/or audio data packets (42, 42') sent from the base station (7) and which indicates the time of dispatch of the respective system data packet (46) and/or audio data packet (42, 42') is used to synchronize the audio clock signal of the respective audio station (5, 6) with the audio clock signal of the base station (7).

13. Method according to claim 12, **characterized in that** a synchronization timer of the audio station (5, 6) is updated by means of respective received time information, the output signal of said synchronization timer in turn being used to update the audio clock signal of the audio station (5, 6).

14. Method according to one of claims 1 to 13, **characterized in that** the respective times of receipt of the system data packets (46) and/or audio data packets (42, 42') sent from the base station (7) are used to synchronize the audio clock signal of the respective audio station (5, 6) with the audio clock signal of the base station (7).

15. Method according to one of claims 1 to 14, **characterized in that** a respective audio unit (14) of the base station (7) is designed to convert optionally from analogue to digital and from digital to analogue.

## Revendications

1. Procédé de transmission sans fil en temps réel d'au moins un signal audio dans au moins un canal audio entre au moins un poste audio émetteur (5) et un poste de base central (7), et d'au moins un autre signal audio dans au moins un autre canal audio entre le poste de base central (7) et un poste audio récepteur (6), le poste audio émetteur (5) comportant au moins une unité de réseau (23) permettant la transmission sans fil de paquets de données audio par l'intermédiaire d'au moins un canal radio, et au moins une unité audio (24) par laquelle, au moins un signal audio analogique (40, 40') transmis par une liaison sans fil au poste audio émetteur (5) est numérisé à une vitesse prédéfinie par un signal d'horloge audio, en formant des échantillons numériques (39, 39'), et/ou au moins un signal audio numérique transmis par une liaison sans fil au poste audio émetteur (5) est lu et le poste audio récepteur (6) comportant au moins une unité de réseau (28) permettant la réception sans fil de paquets de données audio par l'intermédiaire d'au moins un canal radio, et au moins une unité audio (29) par laquelle, des échantillons numériques (44, 44') d'au moins un signal audio reçu par le poste audio récepteur (6) par l'intermédiaire du canal radio ou de l'un des canaux radio sont transformés à une vitesse prédéfinie par un signal d'horloge audio, en un signal audio analogique (45, 45'), et/ou des échantillons numériques d'au moins un signal audio reçu par le poste audio récepteur (6) par l'intermédiaire du canal radio ou de l'un des canaux radio sont délivrés par une liaison sans fil, et, le poste de base (7) comprenant au moins une unité de réseau (13) permettant l'émission et la réception sans fil de paquets de données audio, et au moins une unité audio (14), par laquelle au moins un signal audio peut être soumis à une conversion analogique - numérique et/ou numérique - analogique, et, par le poste de base (7), des paquets de données de système (46) sont transmis aux postes récepteur et émetteur (5, 6) dans au moins un créneau de service (34) se répétant régulièrement, **caractérisé en ce que**
la transmission des signaux audio (40, 40') entre le poste de base central (7) et les postes audio (5, 6) est effectuée selon un procédé de multiplexage temporel synchrone, et, les unités de réseau (13, 23, 28) communiquant entre elles pour la transmission de signaux audio, permettant la transmission de signaux audio (40, 40') sur au moins deux canaux audio par l'intermédiaire du même canal radio, et, à chaque canal audio est attribuée un créneau de données (33, 33') dans lequel les paquets de données audio (42, 42') sont transmis à l'intérieur d'une trame de multiplexage (32) se répétant régulièrement, et, la trame de multiplexage (32) comprend en outre le créneau de service (34), et **en ce que** le signal audio d'un poste audio (5, 6) respectif est synchronisé avec un signal d'horloge audio du poste de base en utilisant les paquets de données de systèmes (46) transmis par le poste de base (7) dans au moins un créneau de service (34), et/ou les paquets de données audio (42, 42') transmis par le poste de base (7) dans au moins un créneau de données (33, 33'), le nombre de bips audio des postes audio (5, 6) délivrés pendant un intervalle de temps prédéfini respectif étant mis en concordance avec le nombre de bips audio du poste de base (7) délivrés pendant le même intervalle de temps.

2. Procédé conforme à la revendication 1,
**caractérisé en ce que**
l'unité audio (14) du poste de base (7) numérise, avec une vitesse prédéfinie par le signal d'horloge audio du poste de base (7), un signal audio analogique (40, 40') transmis par une liaison filaire au poste de base (7), devant être transmis au poste audio récepteur (6) par le canal radio ou l'un des canaux radio en formant des échantillons numériques (39, 39'), et/ou lit un signal audio numérique transmis par une liaison filaire au poste de base (7), devant être transmis au poste audio récepteur (6) par l'intermédiaire du canal radio ou de l'un des canaux radio, et que l'unité audio (14) du poste de base (7) transforme, avec la vitesse prédéfinie par le signal d'horloge audio du poste de base (7), des échantillons numériques (44, 44'), d'au moins un signal audio (45, 45') transmis par le poste audio émetteur (5) par l'intermédiaire du canal radio ou de l'un des canaux radio au poste de base (7) en un signal audio analogique (45, 45'), et/ou délivre par une liaison filaire des échantillons numériques d'au moins un signal audio transmis par le poste audio émetteur (5) par l'intermédiaire du canal radio ou de l'un des canaux radio au poste de base (7).

3. Procédé conforme à la revendication 2,
**caractérisé en ce que**
le poste de base (7) comporte au moins deux unités audio (14) dans lesquelles les vitesses de conversion numérique / analogique et/ou de conversion analogique - numérique et/ou de délivrance et/ou de lecture des signaux audio devant être convertis ou délivrés ou lus sont prédéfinies par le même signal d'horloge audio, ou par des signaux d'horloge audio synchronisés les uns aux autres.

4. Procédé conforme à l'une des revendications 1 à 3,
**caractérisé en ce que**
le poste de base (7) comporte au moins deux unités de réseau (13), et, chacune des unités de réseau (13), permet de transmettre des signaux audio sur au moins deux canaux audio, sur un canal radio propre qui se distingue du canal radio utilisé par les autres unités de réseau (13), en utilisant le procédé de multiplexage temporel synchrone, et, à chaque canal audio est attribué un créneau de données (33, 33') à l'intérieur de la trame de multiplexage (32) qui se répète régulièrement, et, la trame de multiplexage (32) comporte en outre le créneau de service (34), et **en ce que** les trames de multiplexage (32) des différentes unités de réseau (13) sont en concordance dans le temps.

5. Procédé conforme à la revendication 4,
**caractérisé en ce que**
le poste de base (7) comporte une unité de contrôle de système (15), les fonctions de contrôle (15) qui prend en charge des fonctions de contrôle des unités de réseau (13) du poste de base (7), et, de préférence attribue au moins aux unités de canaux (13) des canaux radio respectifs.

6. Procédé conforme à l'une des revendications 1 à 5,
**caractérisé en ce que**
lors de la mise en paquets côté émission, des signaux audio analogiques numérisés (40, 40') et/ou des signaux audio numériques lus, transmis par une liaison filaire, on utilise les différents échantillons de canaux audio (44, 44') qui dérivent d'intervalles d'échantillonnage qui comportent des décalages dans le temps (t_{g}) entre les canaux audio, et l'on utilise également ces décalages dans le temps (tg) entre les canaux audio lors de la séparation des paquets côté réception des échantillons numériques (44, 44') après la transmission sans fil, les échantillons numériques dont les paquets ont été séparés (44, 44') étant à nouveau transformés en signaux audio analogiques (45, 45') et/ou délivrés par une liaison filaire.

7. Procédé conforme à l'une des revendications 1 à 6,
**caractérisé en ce qu'**
un nombre prédéfini de trames de multiplexage (32) est rassemblé en une hyper trame (35), et, à l'intérieur d'une hyper trame (35), les créneaux de service (34) sont utilisés en partie pour la transmission de paquets de données de système (46) du poste de base (7) vers les postes audio (5, 6) et en partie pour la transmission de paquets de données de système des postes audio (5, 6) vers le poste de base (7).

8. Procédé conforme à l'une des revendications 1 à 7,
**caractérisé en ce que**
les trames de multiplexage (32) des unités de réseau (23, 28) des postes audio (5, 6) sont synchronisées dans le temps avec la trame de multiplexage (32) de l'unité de réseau (13) du poste de base (7) en utilisant les paquets de données de système (46) transmis par le poste de base (7) dans au moins un créneau de service (34), et/ou les paquets de données audio (42, 42') transmis par le poste de base (7) dans au moins un créneau de données (33, 33').

9. Procédé conforme à l'une des revendications 1 à 8,
**caractérisé en ce qu'**
on utilise des postes audio récepteurs (6) qui ne sont formés que pour la réception d'au moins un signal audio et des postes audio émetteurs (5) qui ne sont réalisés que pour l'émission d'au moins un signal audio.

10. Procédé conforme à l'une des revendications 1 à 9,
**caractérisé en ce que**
le signal audio transmis par l'un des postes (5, 6, 7) sur un canal audio respectif n'est transmis qu'à un seul des autres postes (5, 6, 7).

11. Procédé conforme à l'une des revendications 1 à 10,
**caractérisé en ce qu'**
une unité de réseau (13) respective du poste de base (7) et une unité de réseau respective (23, 28) d'un poste audio respectif (5, 6) forme un PHY d'un WLAN, de préférence selon un procédé de modulation OFDM.

12. Procédé conforme à l'une des revendications 1 à 11,
**caractérisé en ce que**
pour permettre la synchronisation du signal d'horloge audio du poste audio respectif (5, 6) avec le signal d'horloge audio du poste de base (7), on utilise des informations de temps qui ont été transmises avec le paquet de données de système (46) transmis par le poste de base (7) et/ou des paquets de données audio (42, 42'), et, indiquant l'instant d'émission du paquet de données de système (46) respectif ou du paquet de données audio (42, 42').

13. Procédé conforme à la revendication 12,
**caractérisé en ce qu'**
on actualise avec une information de temps reçue respective, une horloge de synchronisation du poste audio (5, 6), dont le signal de sortie est à nouveau utilisé pour permettre d'actualiser le signal d'horloge audio du poste audio (5, 6).

14. Procédé conforme à l'une des revendications 1 à 13,
**caractérisé en ce que**
pour permettre la synchronisation du signal d'horloge audio du poste audio (5, 6) respectif avec le signal d'horloge audio du poste de base (7), on utilise les instants de réception respectifs des paquets de données de système (46) transmis par le poste de base (7) et/ou les paquets de données audio (42, 42').

15. Procédé conforme à l'une des revendications 1 à 14,
**caractérisé en ce qu'**
une unité audio (14) respective du poste de base (7) est réalisée pour permettre d'effectuer sélectivement une conversion analogique - numérique et une conversion numérique - analogique.
